# EUROPÄISCHE PATENTANMELDUNG

(11) **EP 2 735 437 A1**
(43) Veröffentlichungstag der Anmeldung: **28.05.2014**
(21) Anmeldenummer: 13194007.4
(22) Anmeldetag: 22.11.2013
(51) Int. Cl.: B30B 15/06, B32B 38/06

(54) **Laminierplatte und Verfahren zu deren Herstellung sowie Anordnung zum Laminieren**

(30) Priorität: 23.11.2012 DE 102012111356; 05.09.2013 DE 102013109718
(71) Anmelder: PlascoTec GmbH, 42285 Wuppertal (DE)
(72) Erfinder: Engemann, Jürgen, Prof. Dr., 42119 Wuppertal (DE); Engemann, Tim, 42285 Wuppertal (DE)
(74) Vertreter: Brötz, Helmut

(57) **Zusammenfassung**

Die Erfindung betrifft eine Laminierplatte (1) für Laminierprozesse, insbesondere zur Herstellung von Dokumenten wie bspw. Führerscheinen, Personalausweisen, Kreditkarten oder dergleichen, mittels Folien, wobei die Laminierplatte (1) einen Plattenkörper (2) umfasst, dessen Oberfläche auf zumindest der einen der beiden Plattenseiten (3) in zumindest einem Innenbereich (5) vollständig mit Antihaftbeschichtung (6) beschichtet ist. Zur vorteilhaften Weiterbildung wird vorgeschlagen, dass zumindest auf dieser einen Plattenseite (3) die Oberfläche des Plattenkörpers (2) in zumindest einem Randbereich (7) außerhalb des Innenbereichs (5) nicht oder nur teilflächig mit Antihaftbeschichtung (6) bedeckt ist. Weiter betrifft die Erfindung eine Anordnung zum Laminieren, umfassend zwei oder mehr miteinander gestapelte Laminierplatten (1). Des Weiteren betrifft die Erfindung ein Verfahren zur Herstellung von Laminierplatten (1).

## Beschreibung

Die vorliegende Erfindung betrifft eine Laminierplatte für Laminierprozesse, insbesondere zur Herstellung von Dokumenten wie bspw. Führerscheinen, Personalausweisen, Kreditkarten oder dergleichen mittels Folien, wobei die Laminierplatte einen Plattenkörper umfasst, dessen Oberfläche auf zumindest der einen der beiden Plattenseiten in zumindest einem Innenbereich vollständig mit Antihaftbeschichtung beschichtet ist.

Derartige Laminierplatten werden für die Herstellung von Dokumenten in Form von Stapeln ("Stacks") angeordnet, in denen zwischen je zwei zueinander benachbarten Laminierplatten jeweils mehrere Polycarbonat (PC)-Folien, Polyvinylchlorid (PVC)-Folien, Polyethylen (PE)-Folien oder Folien aus anderen Materialien eingelegt sind. Ein Stapel bzw. Stack kann aus mehreren sog. Sub-Stacks bestehen, wobei als Sub-Stack zwei zueinander parallel beabstandete Laminierplatten und eine Mehrzahl von dazwischen gestapelten Folien bzw. Laminierfolien bezeichnet wird. Folienzahlen zwischen zwei Laminierplatten liegen typisch bei sechs bis acht, können aber auch abweichen. Ein ganzer Stack kann sich bspw. aus sechs bis sieben oder aus einer abweichenden Zahl von Sub-Stapeln (Sub-Stacks) zusammensetzen. Bei der Verwendung einer solchen Anordnung in einem Laminierprozess wird der gesamte Stapel für eine definierte Zeit erhöhtem Druck und erhöhten Temperaturen ausgesetzt, um den jeweiligen Stapel aus in einem Sub-Stack eingelegten Folien miteinander dauerhaft zur Herstellung eines gewünschten Dokuments zu verbinden. Durch den Druck werden die Laminierplatten und dadurch die Folienstapel zusammengepresst. Bevorzugte Werte für Polycarbonatfolien (PC) sind eine Temperatur von etwa 190°C und ein Druck von etwa10 bis 15 N/cm² in der Anfangsphase des Laminationsprozesses, der sich nach etwa 10 Minuten auf 150 bis 200 N/cm² erhöht. Bei anderen Folienmaterialien wie bspw. Polyvinylchlorid (PVC), Polyethylen (PE), etc. sind je nach Bedarf andere Laminier-Prozessparameter einzustellen. Die Folien können bei Bedarf ganzflächig mit einem Kontaktkleber versehen sein, um die mechanische Festigkeit des Folienverbundes zu erhöhen. Bei Polycarbonat kann vorzugsweise ein Kleber auf Polyurethan (PUR)-Basis und bei PVC-Folien vorzugsweise ein Polyamidbasierter Kleber eingesetzt werden. Auf einer oder auf beiden Plattenseiten können in die Laminierplattenoberfläche Strukturen im Mikrometerbereich eingraviert oder gelasert sein, die unter der Einwirkung von Druck und Temperatur auf die an die Laminierplattenoberfläche in dem Sub-Stack angrenzende Folie und somit auf das hergestellte Dokument übertragen werden.

Nach erfolgtem Laminierprozess und ggf. Strukturübertragung der Gravur auf die Folien werden die miteinander fest verbundenen Folien von den Laminierplatten getrennt. Bei diesem Trennvorgang können eventuell Farbresiduen von den Folien oder andere Verunreinigungen auf den Laminierplatten zurückbleiben und dort für die nachfolgenden Laminierprozesse zu Beeinträchtigungen der Produktqualität oder gar zu Produktausfall führen. Aus diesem Grund müssen die Laminierplatten nach einer bestimmten Zyklenzahl gereinigt werden. Diese Produktionsunterbrechungen, verbunden mit der Gefahr einer laufenden Beeinträchtigung der Produktqualität, haben im Stand der Technik zu der Entwicklung von Antihaftschichten auf den Laminierplatten geführt, welche diese negative Begleiterscheinung des Laminierprozesses weitgehend ausschalten sollen. Bekannt sind Laminierplatten, bei denen auf beiden Plattenseiten die Oberfläche des Plattenkörpers jeweils vollflächig, also vollständig, mit Antihaftbeschichtung beschichtet ist.

Während die Antihaftbeschichtung im Zentrum der Laminierplatten bzw. in dem Innenbereich der Laminierplattenoberfläche, der im Fall eines gewünschten Strukturübertrags die Gravuren beinhaltet und in dem es im Regelfall zu keinen starken Verunreinigungen kommt, zu dem gewünschten Effekt führt und es dort wegen fehlender Verunreinigungen oder Kleberesten zu keiner Ablösung von Antihaftbeschichtung kommt, kann es an dem herkömmlich in gleicher Weise mit Antihaftbeschichtung beschichteten Randbereich, welcher den Innenbereich in der Ebene der Laminierplattenoberfläche umgibt, im Stand der Technik noch zu Schwierigkeiten kommen. Dies hängt damit zusammen, dass das Format der Folien etwas kleiner als das Format der Laminierplatten gewählt wird. Während des Laminiervorganges können an den Kanten des Folienverbundes infolge der erhöhten Temperatur und des erhöhten Druckes Reste des thermoplastischen Klebers - sofern vorher appliziert - austreten und entlang der Folienkanten zu unerwünschten Ablagerungen und nachfolgend zu einem Festbacken auf den antihaftbeschichteten Laminierblechen bzw. -platten führen. Nach einem Laminierprozess und ggf. Strukturübertragung auf die Folien werden die Folien von den Laminierplatten getrennt. Bei dem Trennvorgang wird zum Beispiel durch einen Kunststoffspatel mechanischer Druck auf die Folienkanten einschließlich der Klebreste entlang der Folienkanten ausgeübt. Wenn der Kleber fest mit der Antihaftschicht verbunden ist - wie zum Beispiel ein PUR-basierter Kleber auf Polycarbonatfolien - kann dies unter Umständen auch zu einem unerwünschten Ablösen der Antihaftschicht auf der Laminierplatte, ausgehend von der linienförmigen Ablagerung führen. Während eine Ablösung der Antihaftbeschichtung außerhalb des insbesondere gravierten Innenbereichs, der während des Laminierprozesses den sog. Nutzen bildet, ohne Beeinträchtigung der Produktqualität hinzunehmen wäre, beobachtet man, dass beim Ablösen des laminierten Folienstapels von der Laminierplatte, wenn sich in dem an den Innenbereich außen angrenzenden Randbereich an den Klebstoff-Anhaftungen anhaftende Antihaftbeschichtung zunächst lokal von dem Plattenkörper ablöst, dass die lokal abgelöste Antihaftbeschichtung mit der den Innenbereich bedeckenden Antihaftschicht verbunden bleibt, wodurch die Antihaftbeschichtung vom Außenrand des Innenbereichs ausgehend auch in das Innere des Innenbereichs hineinführend, quasi fingerartig, von dem Plattenkörper abgelöst wird, was unerwünscht ist.

Vor diesem Hintergrund liegt der Erfindung die Aufgabe zugrunde, Laminierplatten der eingangs genannten Art vorteilhaft weiterzubilden, so dass insbesondere einzelne oder mehrere der zuvor beschriebenen Nachteile von herkömmlichen Laminierplatten möglichst weitgehend vermieden werden können. Insbesondere besteht eine Zielsetzung darin, eine Ablösung von Antihaftbeschichtung von der Oberfläche des Plattenkörpers im Innenbereich der Laminierplattenoberfläche möglichst weitgehend zu vermeiden. Eine Zielsetzung wird insbesondere auch darin gesehen, bereits der Anhaftung von Ablagerungen und der dadurch möglichen Ablösung von Antihaftbeschichtung im Randbereich der Laminierplatten entgegenzuwirken. Angestrebt wird insbesondere auch eine leichtere Reinigbarkeit der Laminierplatte.

Die genannte Aufgabe wird erfindungsgemäß zunächst und im Wesentlichen in Verbindung mit den Merkmalen gelöst, dass zumindest auf der besagten einen Plattenseite die Oberfläche des Plattenkörpers in zumindest einem Randbereich außerhalb des Innenbereichs nicht oder nur teilflächig mit auf die Oberfläche aufgetragener Antihaftbeschichtung bedeckt ist. Wenn sich der Außenrand des Folienstapels während des Laminierprozesses in einer zu der Laminierplattenebene senkrechten projizierten Betrachtung in dem nicht oder nur teilflächig mit Antihaftbeschichtung bedeckten Randbereich erstreckt, begünstigt oder erzwingt dies, sofern in dem Randbereich überhaupt Antihaftbeschichtung vorhanden ist und sich von dem Plattenkörper ablösen kann, deren randnahe Unterbrechung noch außerhalb des Innenbereiches. Ein allgemeiner, der Lösung zugrunde liegender Gedanke kann darin gesehen werden, den Bereich, in dem beim Abtrennen eines laminierten Folienverbunds von der Laminierplatte eine, insbesondere spatelinduzierte, Kraftwirkung auf den Folienverbund einwirkt, in einen insofern unkritischen Bereich auf der Laminierplatte zu verlegen, von dem keine Ablösung von Antihaftbeschichtung im Innenbereich ausgehen kann oder von dem aus dies zumindest im Vergleich mit den herkömmlichen Laminierplatten erschwert wird. Der Ort der insbesondere spatelinduzierten Kraftwirkung wird in den randnahen Randbereich der Laminierplatten verlegt, der nicht oder nur teilweise mit Antihaftbeschichtung versehen ist, während der Innenbereich (Nutzen), der beim Laminierprozess die Kontaktfläche zu dem später das Produkt bzw. Dokument bildenden Ausschnitt des Folienstapels bildet, vollflächig, d. h. vollständig mit Antihaftbeschichtung bedeckt ist. Da die im Randbereich vorhandene Antihaftbeschichtung mit der im Innenbereich liegenden Antihaftbeschichtung nicht, nur lückenhaft oder sogar nur lokal begrenzt verbunden ist, wird im Fall einer Ablösung von Antihaftbeschichtung im Randbereich ihrer Ausweitung in den Innenbereich wirksam entgegengewirkt. Wenn die Antihaftbeschichtung des Randbereichs von der Antihaftbeschichtung des Innenbereichs ganz getrennt ist, kann sich eine Ablösung im Randbereich nicht in den Innenbereich fortsetzen. Aber auch wenn anstelle einer vollständigen Trennung die Antihaftbeschichtung des Randbereichs bspw. nur verteilte örtliche Unterbrechungen aufweist, wird bei einer dortigen lokalen Ablösung von Antihaftbeschichtung die Ausweitung der Ablösung zu dem Innenbereich erschwert. Um diesen Effekt zu begünstigen, besteht bspw. die Möglichkeit, dass sich die Antihaftbeschichtung von jedem Ort am Außenrand des Innenbereiches ausgehend nicht, zumindest nicht in Richtung der kürzesten Distanz zu dem Außenrand der Laminierplatte, durchgehend bis zu dem Außenrand der Laminierplatte erstreckt.

Der Innenbereich kann vorzugsweise eine rechteckige oder bspw. quadratische Außenkontur aufweisen, jedoch auch jede andere an ein vorgegebenes Folienformat angepasste Formgebung besitzen. In dem Innenbereich liegt die Antihaftbeschichtung frei, d. h. sie bildet die Laminierplattenoberfläche und somit während eines Laminiervorganges die Kontakt- bzw. Andruckfläche für einen Folienstapel. Der Plattenkörper kann bspw. eine aus einem Material oder aus mehreren Materialien hergestellte Platte, Blech oder dergleichen sein, wobei als Material bspw. Metall, Kunststoff usw. in Betracht kommt. Bei einem Plattenkörper kann es sich aber auch um eine zunächst aus einem oder mehreren Materialien hergestellte und anschließend an der Oberfläche (bspw. mit einer Grundierung) beschichtete Platte, Blech oder dergleichen handeln. Unter einer Antihaftbeschichtung wird eine Beschichtung verstanden, deren Wasserkontaktwinkel größer als der Wasserkontaktwinkel einer vergleichsweise nicht mit der Antihaftbeschichtung beschichteten, ansonsten gleichen Oberfläche des Plattenkörpers ist.

Auf einer betrachteten Plattenseite kann bzw. können einem jeweiligen Innenbereich ein Randbereich oder mehrere Randbereiche zugeordnet sein, die sich in der Ebene der Laminierplattenoberfläche außerhalb des Innenbereichs erstrecken und insbesondere direkt an den Innenbereich angrenzen. Unter einer teilflächigen Bedeckung mit Antihaftbeschichtung wird verstanden, dass nur ein gewisser Anteil der Oberfläche mit Antihaftbeschichtung bedeckt ist, wobei die nicht bedeckte Oberfläche des Plattenkörpers zusammenhängend oder aus mehreren, voneinander beabstandeten Teilbereichen gebildet sein kann. Im Gegensatz dazu wird unter einer vollflächigen Bedeckung eine solche verstanden, bei der die gesamte Oberfläche des betrachteten Bereichs mit Antihaftbeschichtung bedeckt ist. In Bereichen, in denen die Oberfläche des Plattenkörpers freiliegt bzw. nicht mit Antihaftbeschichtung beschichtet ist, bildet die Oberfläche des Plattenkörpers die Laminierplattenoberfläche. In Bereichen, in denen die Oberfläche des Plattenkörpers mit Antihaftbeschichtung beschichtet ist, bildet die Antihaftbeschichtung die Laminierplattenoberfläche. Auf einer Plattenseite der Laminierplatte können bei Bedarf mehrere Innenbereiche voneinander beabstandet nebeneinander liegen, um mehrere Folienstapel gleichzeitig pressen zu können. Um die Struktur und die Haptik der Oberfläche des Plattenkörpers in dem bzw. in jedem Innenbereich möglichst einheitlich zu erzeugen, besteht auch die Möglichkeit, dass die Oberfläche vor dem Auftrag von Antihaftbeschichtung je nach Bedarf bspw. poliert, geätzt, gebürstet, gestrahlt oder auf andere zweckmäßige Weise behandelt wird.

Es bestehen zahlreiche weitere Möglichkeiten, um die erfindungsgemäße Laminierplatte vorteilhaft weiterzubilden. So kann bspw. vorgesehen sein, dass auch auf der anderen Plattenseite die Oberfläche des Plattenkörpers in zumindest einem Innenbereich vollständig mit Antihaftbeschichtung beschichtet ist und in zumindest einem Randbereich außerhalb des Innenbereichs nicht oder nur teilflächig mit Antihaftbeschichtung bedeckt ist. Eine insofern auf beiden Plattenseiten erfindungsgemäß weitergebildete Laminierplatte kann in einem Stack nicht nur als oberste oder unterste Laminierplatte, sondern auch als eine dazwischenliegende Laminierplatte, die zu zwei Sub-Stacks gehört, dienen. Insbesondere können in einer zu der Laminierplattenoberfläche senkrechten Projektionsbetrachtung die Randkonturen der Innenbereiche beider Plattenseiten zueinander deckungsgleich sein. Um bei dem Laminierprozess erhabene Strukturen auf dem laminierten Produkt zu erzeugen, können in dem bzw. in jedem gewünschten Innenbereich in die Oberfläche des Plattenkörpers eine oder mehrere Gravuren eingraviert sein. Bevorzugt ist vorgesehen, dass auch die Gravuren von der im Innenbereich aufgetragenen Antihaftbeschichtung vollständig bedeckt sind. Bei den Gravuren kann es sich bspw. um Buchstaben, Zahlen, aber auch um sonstige Zeichen, Wörter, bildhafte oder sonstige Motive, Muster oder dergleichen handeln. Bei Bedarf können auf beiden Plattenseiten in je einem oder mehreren Innenbereichen Gravuren vorhanden sein.

In geometrischer Hinsicht ist bevorzugt, dass der Randbereich an den Außenrand des Innenbereichs, insbesondere entlang des gesamten Verlaufs des Außenrandes, angrenzt, zumindest abschnittsweise oder insgesamt streifenförmig berandet ist und insbesondere rahmenartig den Innenbereich umschließt. Dabei kann eine Breite des Randstreifens von vorzugsweise 10 mm bis 20 mm (oder auch abweichend) gewählt sein. Für den Laminierprozess wird zweckmäßig ein Folienformat gewählt, so dass der Rand des Folienstapels in dem besagten Randbereich liegt. Vorzugsweise kann der Rand des Folienstapels in Längsrichtung des Randbereichs etwa in der Mitte, also bei halber Randbreite, verlaufen. Bevorzugt ist auch, dass sich der Randbereich zumindest abschnittsweise, vorzugsweise aber entlang seiner gesamten Umfangserstreckung, bis an den Außenrand der Laminierplatte erstreckt.

Wenn in einer zweckmäßigen Ausführungsform der Randbereich gänzlich nicht mit Antihaftbeschichtung bedeckt ist und sich der Rand des Folienstapels innerhalb des Randbereiches erstreckt, können etwaige, bei dem Laminierprozess am Außenrand des Folienstapels entstehende Anhaftungen, bspw. Anbackungen von Klebstoff, beim Abtrennen des laminierten Stapels von der Laminierplatte nur in dem Randbereich zu Veränderungen an der Oberfläche der Laminierplatte führen. Es ist dabei aber, da der Randbereich keine Antihaftbeschichtung aufweist, ausgeschlossen, dass es durch Anhaftungen zur Ablösung von Antihaftbeschichtung im Innenbereich kommt.

Bei einer anderen zweckmäßigen Ausführungsform ist vorgesehen, dass der Randbereich nur teilflächig in der Weise mit Antihaftbeschichtung bedeckt ist, dass in dem Randbereich auch eine Vielzahl von Teilbereichen der Oberfläche des Plattenkörpers nicht mit Antihaftbeschichtung bedeckt ist, wobei die Teilbereiche regelmäßig oder unregelmäßig in dem Randbereich verteilt sein können und wobei vorzugsweise vorgesehen ist, dass die typischen oder durchschnittlichen Abmessungen dieser Teilbereiche kleiner, insbesondere um eine Größenordnung oder um mehrere Größenordnungen kleiner, als typische Abmessungen, beispielsweise als die Breite oder Länge, des Randbereiches sind. Innerhalb dieser lokal begrenzten Teilbereiche bzw. lokalen Unterbrechungen wird die Laminierplattenoberfläche nicht von Antihaftbeschichtung, sondern von der Oberfläche des Plattenkörpers selbst gebildet. Die Herstellung kann zweckmäßig so erfolgen, dass auch in dem Randbereich zunächst vollflächig Antihaftbeschichtung aufgebracht wird, jedoch anschließend in den Teilbereichen wieder entfernt wird, wobei die Entfernung bspw. mittels Strahlbehandlung, Gravurverfahren oder auf andere Weise erfolgen kann. Kommt es nach einem Laminierprozess beim Abtrennen des laminierten Folienstapels von der Laminierplatte örtlich zur Ablösung von Antihaftbeschichtung im Randbereich, wird eine unerwünschte Ausweitung der Ablösung durch die Unterbrechungen der Antihaftbeschichtung erschwert, da die zwischen den Unterbrechungen liegenden Schichtbereiche wie Sollbruchstellen das Abreißen begünstigen. Diese Ausführungsform besitzt den Vorteil, dass auch im Randbereich Anhaftungen durch die in begrenzten Teilbereichen vorhandene Antihaftbeschichtung weiter erschwert wird, während gleichzeitig die Ausweitung etwaiger Ablösungen der Antihaftbeschichtung erschwert wird. Die bei der Herstellung der Laminierplatte geschaffenen, nicht mit Antihaftbeschichtung bedeckten Teilbereiche sind vorzugsweise im gesamten Randbereich, insbesondere gleichmäßig, verteilt. Bevorzugt ist, dass sämtliche dieser Teilbereiche oder zumindest die überwiegende Anzahl dieser Teilbereiche an ihrem jeweiligen Außenrand umlaufend von Antihaftbeschichtung umrandet ist und/oder dass in Bezug auf jeweils einzeln betrachtete dieser Teilbereiche innerhalb der Erstreckungsebene ihre Abmessungen in mehreren Richtungen in der gleichen Größenordnung liegen, insbesondere etwa gleich groß sind, wie dies auch bspw. in Figuren gezeigt ist. Bevorzugt ist, dass die nicht mit Antihaftbeschichtung bedeckten Teilbereiche entlang des gesamten Randbereiches, d. h. im gesamten Verlauf des Randbereiches, mit gleicher oder im Wesentlichen gleicher Häufigkeit (also Anzahl pro Bezugsfläche) und/oder Größenverteilung und/oder Formgebung vorhanden sind.

Ein Maß für die Wirksamkeit einer Antihaftbeschichtung ist der sog. Wasserkontaktwinkel ("water contact angle" WCA). Je größer der Wasserkontaktwinkel ist, desto ausgeprägter ist die Antihaftwirkung. Für eine spiegelnde Oberfläche liegt der Wasserkontaktwinkel für DLC-(diamond-like carbon) basierte Antihaftschichten typischerweise bei 95 Grad bis 100 Grad. Bei einer geeignet aufgerauten und nachfolgend mit einer Antihaftschicht beschichteten Oberfläche werden Wasserkontaktwinkel von 120 Grad und mehr erreicht. Im Vergleich dazu zeigt eine polierte, nicht beschichtete Oberfläche eines Laminierbleches bzw. Plattenkörpers einen Wasserkontaktwinkel von typisch etwa 45 Grad bis 50 Grad.

Vor diesem Hintergrund ist bei einer anderen zweckmäßigen Ausführungsform vorgesehen, dass in dem Randbereich die Oberfläche des Plattenkörpers vollflächig oder teilflächig poliert ist und dass anschließend die polierte Oberfläche vollflächig oder zumindest teilflächig freiliegt, d. h. nicht mit Antihaftbeschichtung bedeckt ist und folglich die Laminierplattenoberfläche bildet. Wenn sich der Außenrand des Folienstapels in diesem Randbereich erstreckt, beginnt die Antihaftbeschichtung wiederum erst in einem Bereich bzw. in einem Abstand von dem Laminierplattenaußenrand, der nicht mehr durch randnahe Verunreinigungen oder Folienkleberreste betroffen ist. Dabei bewirkt die Politur der Oberfläche eine im Vergleich zu einer unpolierten Oberfläche geringere Anhaftungsneigung.

Bei einer weiteren zweckmäßigen Ausführungsform ist vorgesehen, dass in dem Randbereich die Oberfläche des Plattenkörpers vollflächig oder teilflächig aufgeraut ist und dass die aufgeraute Plattenoberfläche vollflächig freiliegt, d. h. nicht mit Antihaftbeschichtung bedeckt ist und insofern die Laminierplattenoberfläche bildet. Der Begriff vollflächig bedeutet wieder, dass innerhalb eines betrachteten Bereiches die gesamte Oberfläche betroffen ist, während der Begriff teilflächig ausdrückt, dass nur ein gewisser Anteil der Oberfläche in diesem Bereich, also insbesondere einer oder mehrere, miteinander verbundene oder nicht verbundene Teilbereiche betroffen sind. Im Vergleich zu einer unbehandelten Oberfläche des Plattenkörpers kann auch durch eine Aufrauung eine geringere Anhaftungsneigung erreicht werden. Insbesondere kann dadurch die Antihaftwirkung im Randbereich gegenüber dem Innenbereich deutlich angehoben werden. Dies führt dazu, dass die Ablagerung und/oder Haftung von Kleberesiduen auf den Laminierplatten deutlich reduziert wird und damit ein zerstörungsfreies Ablösen des Folienverbunds von den Laminierplatten durch Ansetzen eines Spatels an dem Folienrand möglich ist. Wenn sich der Außenrand des Folienstapels in diesem Randbereich erstreckt, kann von dort keine Ablösung von Antihaftbeschichtung in den Innenbereich hinein ausgehen. Es kann bereits eine geringe Rautiefe ausreichend sein, bei der der aufgeraute Bereich matt wirkt, während der Innenbereich bis auf die Gravuren hochspiegelnd ist.

Eine andere bevorzugte Ausführungsform ist dadurch gekennzeichnet, dass der Randbereich einen teilflächig oder vollflächig mit Antihaftbeschichtung beschichteten Außenbereich und einen zwischen dem Innenbereich und dem Außenbereich liegenden, nicht von Antihaftbeschichtung bedeckten Zwischenbereich umfasst, wobei vorzugsweise vorgesehen ist, dass der Zwischenbereich den Innenbereich rahmenartig umschließt und der Außenbereich den Zwischenbereich rahmenartig umschließt, so dass der Außenbereich von dem Innenbereich vollständig getrennt ist. Im Vergleich zu einem unbehandelten Randbereich bewirkt die im Außenbereich freiliegende Antihaftbeschichtung eine niedrigere Haftungsneigung. Da der Zwischenbereich die Antihaftbeschichtung des Außenbereichs dabei vollständig von der Antihaftbeschichtung des Innenbereichs trennt, es also keine Beschichtungsbrücke zwischen Innen- und Außenbereich gibt, kann sich eine etwaige Ablösung von Antihaftbeschichtung im Außenbereich nicht auf den Innenbereich übertragen. Der Zwischenbereich kann sich vorzugsweise entlang jeder Randseite des Innenbereichs jeweils streifenförmig erstrecken, und der Außenbereich kann sich vorzugsweise entlang jeder Außenrandseite des Zwischenbereichs auch jeweils streifenförmig erstrecken. Durch diese Trennung werden Sekundärschäden im zentralen Bereich des Laminierplatten verhindert. Andererseits erleichtert aber die im Außenbereich vorhandene Antihaftbeschichtung dort die Reinigung der Oberfläche von eventuellen Verunreinigungen und Kleberresten. Angesichts der beschriebenen geometrischen Beziehungen kann der Zwischenbereich auch als innerer Randbereich und der Außenbereich auch als äußerer Randbereich bezeichnet werden.

Eine weitere zweckmäßige Ausführungsform ist dadurch gekennzeichnet, dass die Oberfläche des Plattenkörpers im Randbereich vollflächig poliert ist, dass die polierte Oberfläche in einem Zwischenbereich des Randbereichs, der zwischen dem Innenbereich und einem Außenbereich des Randbereiches liegt, freiliegt und dass auf die polierte Oberfläche in dem Außenbereich, vorzugsweise vollflächig, Antihaftbeschichtung aufgetragen ist. Die in dem Zwischenbereich freiliegende polierte Oberfläche und die in dem Außenbereich freiliegende Antihaftbeschichtung reduzieren jeweils die Haftungsneigung und erleichtern die Reinigung, wobei sich eine etwaige Ablösung von Antihaftbeschichtung in dem Außenbereich nicht durch den Zwischenbereich in den Innenbereich ausweiten kann.

Bei einer weiteren zweckmäßigen Ausführungsform ist vorgesehen, dass in dem Randbereich die Oberfläche des Plattenkörpers in einem Zwischenbereich, der zwischen dem Innenbereich und einem zu dem Randbereich gehörenden Außenbereich liegt, poliert ist und freiliegt, dass die Oberfläche des Plattenkörpers in dem Außenbereich aufgeraut ist und dass in dem Außenbereich auf die aufgeraute Oberfläche vollflächig oder teilflächig Antihaftbeschichtung aufgetragen ist. Dadurch, dass in dem Außenbereich die Antihaftbeschichtung auf einen aufgerauten Untergrund aufgetragen wird, kann der Wasserkontaktwinkel auf der Antihaftbeschichtung noch weiter bis zu typischen Werten von etwa 115 Grad bis etwa 120 Grad gesteigert und dadurch die Anhaftung noch weiter reduziert werden.

Bevorzugt ist, dass die Antihaftbeschichtung Kohlenstoff mit weiteren Elementen wie beispielsweise Silizium und Sauerstoff - andere Element-Beimischungen zu Kohlenstoff sind ebenfalls möglich - aufweist, wobei es sich vorzugsweise um eine Antihaftbeschichtung auf Kohlenstoffbasis, wie bspw. um eine DLC-Schicht, handelt und/oder dass die Antihaftbeschichtung Teflon und/oder Nano-Partikel aufweist oder dass die Antihaftbeschichtung eine CrN-Schicht ist.

Wie aus der Beschreibung deutlich wird, sind darin die Begriffe Innenbereich, Randbereich, Außenbereich und Zwischenbereich auf ihre relative Lage zueinander in der Ebene der Laminierplattenoberfläche bezogen. Der Innenbereich kann insofern bezüglich seiner Lage auch als innerer Bereich bezeichnet werden. Er kann, wobei dies aber nicht notwendig ist, bspw. einen Bereich um die Mitte der Laminierplattenoberfläche einschließen. Bezüglich der Aufteilung der beiden Plattenseiten in diese Bereiche kann vorzugsweise eine zueinander korrespondierende, insbesondere sich spiegelbildlich entsprechende, Aufteilung gewählt sein. Wenn der Randbereich teilweise mit Antihaftbeschichtung beschichtet ist, kann es sich um die gleiche oder um eine andere Art von Antihaftbeschichtung wie bei der im Innenbereich aufgetragenen Antihaftbeschichtung handeln.

Während des Laminiervorganges werden zwischen Laminierplatten eingebrachte Folienstacks unter Druck auf eine Temperatur gebracht, bei der eine plastische Verformung der einzelnen Folien einsetzt. Bei offener seitlicher Begrenzung der einzelnen Folien kann damit unter Umständen eine Kriechen ("Creeping") der Folien verbunden sein, das sich um so stärker auswirkt, je größer die Antihaftwirkung der Laminierplattenoberfläche ist. Gerade diese an sich gewünschte Antihaftwirkung ist aber die Aufgabe der Antihaftbeschichtung. Wenn Bedingungen vorliegen, unter denen ein Kriechen der Folien beim Laminieren erfolgt, können ohne Gegenmaßnahme in die Laminierplatten eingebrachte Mikrostrukturen unter dem Einfluss des Kriechens in ihren Konturen verschmieren und damit unbrauchbar werden. Ähnliches gilt für eventuell lokal begrenzte Verunreinigungen oder mechanische Defekte auf mit Antihaftbeschichtung beschichteten Bereichen der Laminierplattenoberfläche. Durch das Kriechen können linien-, streifen oder flächenförmige Defekte entstehen, die sich optisch sichtbar - und damit inakzeptabel - auf den Folien wiederfinden.

Um das beschriebene Kriechen zumindest zu verringern oder möglichst vollständig zu verhindern, schlägt die Erfindung insbesondere als bevorzugte Weiterbildung vor, dass an der Oberfläche der Laminierplatte die Rauigkeit, vorzugsweise die gemittelte Rautiefe und/oder der arithmetische Mittenrauwert, in einem oder mehreren, insbesondere allen von Antihaftbeschichtung bedeckten Bereichen des Randbereiches größer ist als in dem von Antihaftbeschichtung bedeckten Innenbereich. Die hier verglichene Rauigkeit (neuerdings findet man hierfür in der Literatur zunehmend den Begriff Rauheit) ist somit auf der jeweiligen Antihaftbeschichtung (d. h. nicht vor dem Auftrag der Antihaftbeschichtung auf der noch unbeschichteten Oberfläche des Plattenkörpers) zu ermitteln. Bevorzugt ist allerdings vorgesehen, dass die Antihaftbeschichtung mittels des sog. plasma enhanced chemical vapour deposition-Verfahrens (sog. PECVD-Verfahren) auf die Oberfläche des Plattenkörpers aufgebracht wird. Mit dem PECVD-Verfahren abgeschiedene Schichten folgen konform und konturgetreu der vorgegebenen Topographie auf der Oberfläche des Plattenkörpers. In Konsequenz findet sich dann die Rauigkeit der Oberfläche des Plattenkörpers bei der Antihaftbeschichtung bzw. bei der Messung auf der Antihaftbeschichtung mit sehr guter Näherung wieder. Bevorzugt ist vorgesehen, dass an der Oberfläche der Laminierplatte die gemittelte Rautiefe und/oder der arithmetische Mittenrauwert in dem oder den von Antihaftbeschichtung bedeckten Bereichen des Randbereiches 1 µm beträgt oder größer als 1 µm ist und/oder kleiner als 10 µm ist, vorzugsweise im Wertebereich von 2 bis 5 µm liegt, weiter vorzugsweise im Wertebereich von 2,5 bis 3,5 µm liegt und weiter vorzugsweise 3 µm oder etwa 3 µm beträgt. Die Rauigkeitswerte können bspw. auf den arithmetischen Mittenrauwert bezogen sein. Alternativ oder kombinativ können die Werte auf die sog. gemittelte Rautiefe bezogen sein, wobei Versuche gezeigt haben, dass entlang einer vorgegebenen Messbezugsstrecke auf einem Rauigkeitsprofil die Ermittlung der sog. gemittelten Rautiefe R_{z} nur zu geringfügig anderen Zahlenangaben als die Ermittlung des sog. arithmetischen Mittenrauwerts Rₐ führte. Versuche haben überraschend gezeigt, dass sich durch eine wie vorangehend angegebene Rauigkeit im Randbereich ein Mikroformschluss zwischen der Laminierplatte und der angrenzenden Folie erreichen lässt, der ein unerwünschtes laterales Verschieben, das ansonsten insbesondere als Folge einer durch Querkontraktion verursachten Dehnung auftreten kann, verhindern kann. Die Entstehung des Mikroformschlusses zwischen Folien und Laminierplatten wird beim Laminieren durch das Anlegen eines Anpressdruckes und die Temperaturerhöhung unterstützt. Der Mikroformschluss verleiht der Laminierplattenoberfläche eine zusätzliche Wirkeigenschaft. Der Mikroformschluss und die für ihn maßgebliche Rauigkeit sind auf der Laminierplattenoberfläche nur außerhalb des sog. Nutzens in dem Randbereich vorhanden. Obwohl somit ursächlich die unerwünschte Lateralbewegung nur im Randbereich unterdrückt wird, hat sich überraschend herausgestellt, dass die den Rand der Laminierplatten umlaufende Aufrauung sehr effektiv das Creeping der Folie insgesamt reduziert. Weitere Aufrauungen auf der Plattenoberfläche, bspw. an einem oder mehreren Mittelstegen, die sich zwischen voneinander beabstandeten Innenbereichen bzw. Nutzen erstrecken, können diesen Effekt noch weiter unterstützen. Geeignete Rautiefen liegen bereits bei einem Wert der gemittelten Rautiefe oder des arithmetischen Mittenrauwertes von etwa 1 µm vor. Durch Erhöhung auf Werte, die größer als 1 µm sind, lässt sich das Creeping noch weiter reduzieren. Vorteilhaft bleibt trotz des erzielbaren Mikroformschlusses, der lateral bzw. in Richtungen parallel zu der Plattenoberfläche wirksam ist, die Antihaftbeschichtung erhalten, so dass ein leichtes vertikales Ablösen der Folien von den Laminierplatten möglich ist.

Die Erfindung betrifft auch eine Anordnung zum Laminieren, umfassend zwei oder mehr miteinander gestapelte Laminierplatten, wobei zwischen je zwei Laminierplatten jeweils ein Folienstapel angeordnet ist, der eine Mehrzahl von, im Bedarfsfall mit Klebstoff beschichteten, Folien umfasst. Es sind allerdings auch Anwendungsfälle ohne Klebstoff-Einsatz möglich.

Ausgehend von dem eingangs erläuterten Stand der Technik wird zur Lösung der genannten Aufgabe vorgeschlagen, dass es sich bei den Laminierplatten um erfindungsgemäße Laminierplatten handelt und dass in einer zu der Laminierplattenoberfläche senkrechten projektionsmäßigen Betrachtung der Außenrand des Folienstapels in dem Randbereich, vorzugsweise in dem Außenrand des Randbereiches, der Laminierplatten verläuft. Insofern betrifft die Erfindung auch eine Verwendung der erfindungsgemäßen Laminierplatten in einer solchen Anordnung bzw. in einem Laminierverfahren. Wie schon angesprochen, wird eine derartige Anordnung auch als Laminierstack oder Laminierstapel bezeichnet. Vorzugsweise verläuft der Außenrand des Folienstapels mittig in dem Randbereich oder mittig in dem Außenbereich der Laminierplatten. Dazu können entweder die Laminierplatten schon bei ihrer Herstellung auf ein gewünschtes Folienformat abgestimmt, also etwas größer gewählt werden, oder können Folien mit zu den Abmessungen von Laminierplatten passendem, also etwas kleinerem Folienformat gewählt werden. Je nach Anwendungsfall besteht die Möglichkeit, dass entweder der gesamte Außenrand, also dessen gesamte Länge bzw. Umfang oder nur ein oder mehrere Abschnitte des Außenrandes des Folienstapels in dem Randbereich bzw. in dem Außenbereich verläuft. Zu insofern möglichen Wirkungen und Weiterbildungen wird auf die vorangehende Beschreibung Bezug genommen.

Die Erfindung betrifft auch ein Verfahren zur Herstellung von Laminierplatten, wobei zur Herstellung einer Laminierplatte ein Plattenkörper bereit gestellt und auf zumindest einer der beiden Plattenseiten des Plattenkörpers an seiner Oberfläche in zumindest einem Innenbereich vollständig mit Antihaftbeschichtung beschichtet wird.

Ausgehend von dem beschriebenen Stand der Technik wird zur Lösung der genannten Aufgabe vorgeschlagen, dass zumindest auf der Plattenseite, auf der die Oberfläche des Plattenkörpers in dem Innenbereich mit Antihaftbeschichtung beschichtet ist, die Oberfläche des Plattenkörpers in zumindest einem außerhalb des Innenbereichs liegenden Randbereich, der den Innenbereich vorzugsweise rahmenartig umschließt, nicht oder nur teilflächig mit Antihaftbeschichtung beschichtet wird oder die Oberfläche des Plattenkörpers in dem besagten Randbereich vollständig mit Antihaftbeschichtung beschichtet wird und die Antihaftbeschichtung anschließend in Teilbereichen des Randbereiches entfernt wird. Je Plattenseite kann ein Innenbereich oder können mehrere Innenbereiche vorhanden sein, wobei jedem Innenbereich bei Bedarf eine bestimmte, durch Gravur herstellbare Struktur zugeordnet werden kann. Die Gravur kann bspw. mittels Laser- oder Stichelgravur erzeugt werden. Bei unstrukturierten Laminierplatten entfällt dieser Schritt.

Es bestehen zahlreiche weitere Möglichkeiten, um das erfindungsgemäße Verfahren vorteilhaft weiterzubilden. Eine zweckmäßige Weiterbildung wird darin gesehen, dass auch auf der anderen der beiden Plattenseiten die Oberfläche des Plattenkörpers in zumindest einem Innenbereich vollständig mit Antihaftbeschichtung beschichtet wird und dass die Oberfläche des Plattenkörpers in zumindest einem außerhalb des Innenbereichs liegenden Randbereich, der den Innenbereich vorzugsweise rahmenartig umschließt, vollständig mit Antihaftbeschichtung beschichtet wird, wonach die Antihaftbeschichtung in Teilbereichen des Randbereiches entfernt wird, oder dass die Oberfläche in dem genannten Randbereich nicht oder nur teilflächig mit Antihaftbeschichtung beschichtet wird. Die Entfernung von Antihaftbeschichtung in Teilbereichen kann bspw. mittels Strahlbehandlung erfolgen, vorzugsweise unter Verwendung von Korund oder von Glasperlen als Strahlmittel, wobei insbesondere Strahlmittel mit einer Korngröße im Bereich von 355 µm bis 500 µm verwendet werden kann. Alternativ oder kombinativ kann die Antihaftbeschichtung in Teilbereichen des Randbereichs mittels Gravur eines regelmäßigen oder unregelmäßigen Musters, insbesondere mittels Stichel und/oder Laser und/oder mittels lokalem Ätzen in Verbindung mit fotolithografischen Schritten oder dergleichen entfernt werden.

Bei einer anderen Weiterbildung des Verfahrens besteht die Möglichkeit, dass die freiliegende Oberfläche des Plattenkörpers in dem Randbereich vollflächig oder teilflächig aufgeraut wird, und dass die Oberfläche des Plattenkörpers in dem Randbereich nicht oder nur teilflächig mit Antihaftbeschichtung beschichtet wird. Die Formulierung freiliegend meint, dass vor der Aufrauung keine Antihaftbeschichtung aufgetragen wurde. Falls der Innenbereich graviert wird, kann die Aufrauung im Randbereich zuvor oder im Anschluss daran erfolgen. Eine noch speziellere Weiterbildung sieht vor, dass die freiliegende Oberfläche des Plattenkörpers innerhalb des Randbereiches nur in einem mittels eines Zwischenbereiches des Randbereichs von dem Innenbereich getrennten Außenbereich des Randbereichs aufgeraut und anschließend vollflächig oder teilflächig mit Antihaftbeschichtung beschichtet wird. Im Zusammenhang mit den vorangehend angesprochenen Weiterbildungen wird als zweckmäßig angesehen, dass in dem Randbereich, vorzugsweise nur in dem Außenbereich, die Aufrauung mittels Strahlbehandlung, vorzugsweise unter Verwendung von Korund oder Glasperlen als Strahlmittel, erfolgt, wobei vorzugsweise Strahlmittel mit einer Korngröße im Bereich von 355 µm bis 500 µm verwendet wird, und/oder dass in dem Randbereich, vorzugsweise nur in dem Außenbereich, die Aufrauung mittels Gravur eines regelmäßigen oder unregelmäßigen Musters, vorzugsweise mittels Stichel, Laser oder mittels lokalem Ätzen in Verbindung mit fotolithografischen Schritten oder dergleichen, erfolgt. Auch andere Strukturierungsverfahren sind geeignet, um ein Aufrauungsmuster von geeigneter Rautiefe und Periodizität zu erzeugen.

Auch besteht die Möglichkeit, dass in dem Randbereich die Oberfläche des Plattenkörpers vollflächig oder teilflächig poliert wird. Dabei besteht bspw. auch die Möglichkeit, dass im Randbereich die Oberfläche des Plattenkörpers vollflächig poliert wird und dass die dabei gebildete polierte Oberfläche nur in einem durch einen Zwischenbereich des Randbereichs von dem Innenbereich getrennten Außenbereich des Randbereichs mit Antihaftbeschichtung beschichtet wird. Vorzugsweise kann der Randbereich an den Außenrand des Innenbereichs angrenzen und bis an den Außenrand der Laminierplatte reichen. Innerhalb des Randbereichs kann der besagte Zwischenbereich an den Außenrand des Innenbereichs angrenzen, der Außenbereich an den Außenrand des Zwischenbereichs angrenzen und sich bis zu dem Außenrand der Laminierplatte erstrecken.

Insbesondere in Verbindung mit der beschriebenen Maßnahme, dass die Oberfläche nur in dem Außenbereich aufgeraut und anschließend mit Antihaftbeschichtung beschichtet wird, ist als Weiterbildung bevorzugt, dass die Oberfläche des Plattenkörpers innerhalb des Randbereiches nur in dem Zwischenbereich poliert wird, ohne dass anschließend Antihaftbeschichtung auf die polierte Oberfläche aufgetragen wird.

Im Hinblick auf die vorangehende Beschreibung ist bzgl. des Zwischenbereichs und des Außenbereichs bevorzugt, dass der Zwischenbereich an den Außenrand des Innenbereichs, insbesondere entlang des gesamten Verlaufs des Außenrands des Innenbereichs, angrenzt. Auch ist bevorzugt, dass der Außenbereich an den Außenrand des Zwischenbereichs, insbesondere entlang des gesamten Verlaufs des Außenrands des Zwischenbereichs, angrenzt.

Die Erfindung wird nachfolgend mit Bezug auf die beigefügten Figuren, welche bevorzugte Ausführungsbeispiele zeigen, weiter beschrieben. Darin zeigt:
- Fig. 1: perspektivisch eine erfindungsgemäße Laminierplatte gemäß einem ersten Ausführungsbeispiel;
- Fig. 2: eine Draufsicht auf die in Fig. 1 gezeigte Laminierplatte in dortiger Blickrichtung I;
- Fig. 2a: eine Ausschnittsvergrößerung von Detail IIa aus Fig. 2;
- Fig. 3: eine Schnittansicht entlang Schnittebene III - III in Fig. 2;
- Fig. 3a: eine Ausschnittsvergrößerung von Detail IIIa aus Fig. 3;
- Fig. 4: eine Draufsicht auf die in Fig. 1 gezeigte Laminierplatte mit darauf ausgerichtetem Folienstapel;
- Fig. 5: eine Abwandlung der in Fig. 4 gezeigten Ausführung mit zwei Folienstapeln;
- Fig. 6: schematisch einen Längsschnitt durch eine gestapelte Anordnung zum Laminieren, welche mehrere Laminierplatten gemäß den Figuren 1 bis 4 umfasst;
- Fig. 7: eine Ausschnittsvergrößerung von Detail VII aus Fig. 6, ebenfalls in Explosionsansicht;
- Fig. 7a: den in Fig. 7 gezeigten Ausschnitt der Anordnung, jedoch nach dem Laminieren;
- Fig. 8: perspektivisch eine erfindungsgemäße Laminierplatte gemäß einem weiteren bevorzugten Ausführungsbeispiel;
- Fig. 9: eine Draufsicht auf die in Fig. 8 gezeigte Laminierplatte in dortiger Blickrichtung IX;
- Fig. 9a: eine Ausschnittsvergrößerung von Detail IXa aus Fig. 9;
- Fig. 10: eine Schnittansicht entlang Schnittebene X - X in Fig. 9;
- Fig. 10a: eine Ausschnittsvergrößerung von Detail Xa aus Fig. 10;
- Fig. 11: eine Draufsicht auf die in Fig. 8 gezeigte Laminierplatte mit darauf ausgerichtetem Folienstapel;
- Fig. 12: perspektivisch eine erfindungsgemäße Laminierplatte gemäß einem weiteren bevorzugten Ausführungsbeispiel;
- Fig. 13: eine Draufsicht auf die in Fig. 12 gezeigte Laminierplatte in dortiger Blickrichtung XIII,
- Fig. 13a: eine Ausschnittsvergrößerung von Detail XIIIa aus Fig. 13;
- Fig. 14: eine Schnittansicht entlang Schnittebene XIV - XIV in Fig. 13;
- Fig. 14a: eine Ausschnittsvergrößerung von Detail XIVa aus Fig. 14;
- Fig. 15: eine Draufsicht auf die in Fig. 12 gezeigte Laminierplatte mit darauf ausgerichtetem Folienstapel;
- Fig. 16: perspektivisch eine erfindungsgemäße Laminierplatte gemäß einem weiteren bevorzugten Ausführungsbeispiel;
- Fig. 17: eine Draufsicht auf die in Fig. 16 gezeigte Laminierplatte in dortiger Blickrichtung XVII;
- Fig. 17a: eine Ausschnittsvergrößerung von Detail XVII a aus Fig. 17;
- Fig. 18: eine Schnittansicht entlang Schnittebene XVIII - XVIII in Fig. 17;
- Fig. 18a: eine Ausschnittsvergrößerung von Detail XVIIIa aus Fig. 18;
- Fig. 19: eine Draufsicht auf die in Fig. 1 gezeigte Laminierplatte mit darauf ausgerichtetem Folienstapel;
- Fig. 20: perspektivisch eine erfindungsgemäße Laminierplatte gemäß einem weiteren bevorzugten Ausführungsbeispiel;
- Fig. 21: eine Draufsicht auf die in Fig. 20 gezeigte Laminierplatte in dortiger Blickrichtung XXI;
- Fig. 21a: eine Ausschnittsvergrößerung von Detail XXIa aus Fig. 21;
- Fig. 22: eine Schnittansicht entlang Schnittebene XXII - XXII in Fig. 21;
- Fig. 22a: eine Ausschnittsvergrößerung von Detail XXIIa aus Fig. 22 und
- Fig. 23: eine Draufsicht auf die in Figur 20 gezeigte Laminierplatte mit darauf ausgerichtetem Folienstapel.

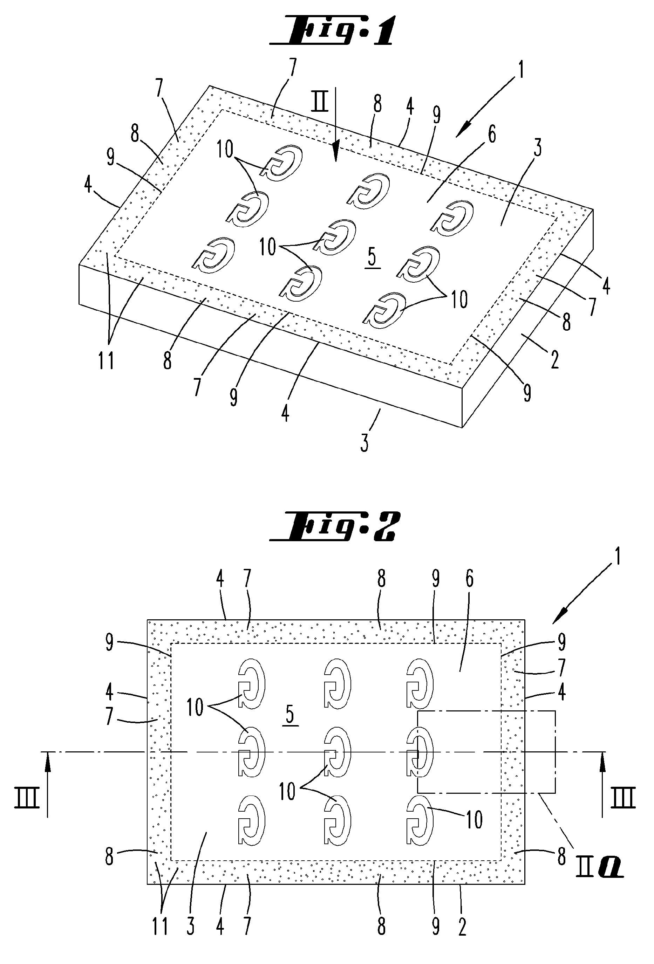

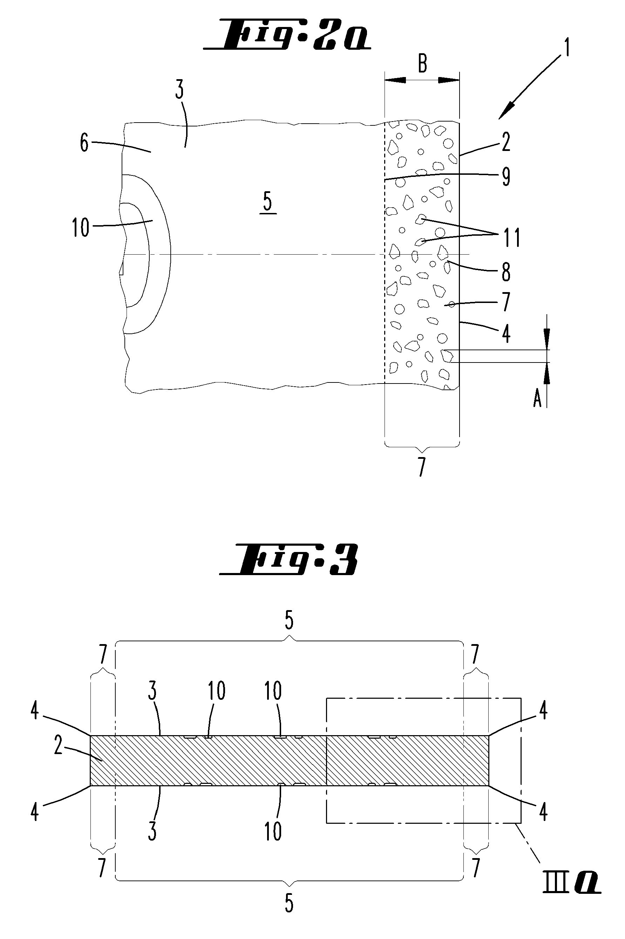

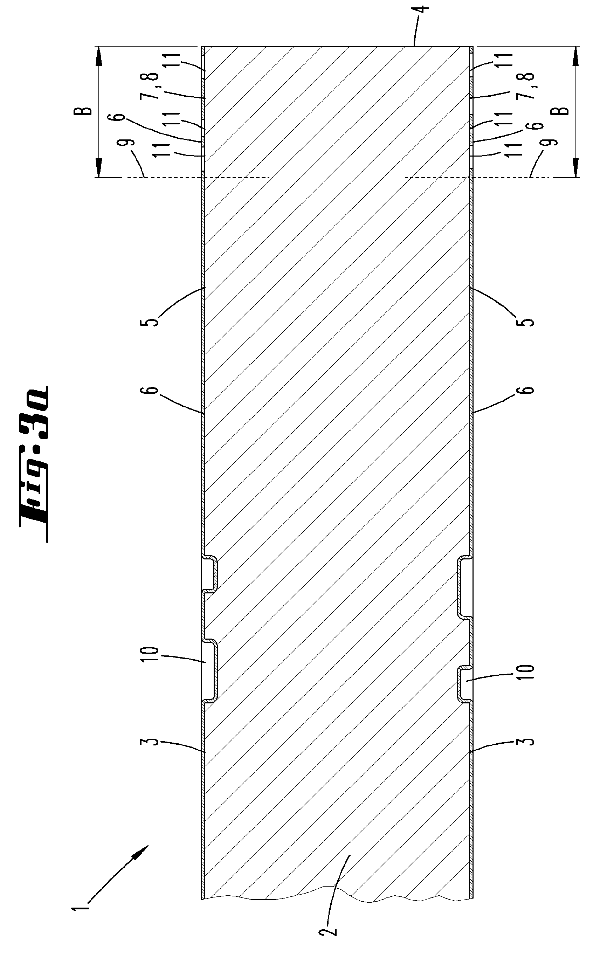

Mit Bezug auf die Figuren 1 bis 4 wird zunächst eine erfindungsgemäße Laminierplatte 1 gemäß einem ersten bevorzugten Ausführungsbeispiel vorgestellt. Wie auch bei den nachfolgenden Figuren ist die Darstellung schematisch und folglich weder maßstabs- noch größengerecht. Die Laminierplatte 1 umfasst einen in dem Beispiel aus Metall hergestellten Plattenkörper 2, der die Gestalt eines rechteckig berandeten Bleches besitzt. Die Oberfläche des Plattenkörpers 2 besitzt somit auf den beiden einander entgegengesetzt weisenden, jeweils mit 3 bezeichneten Plattenseiten einen rechteckigen Außenrand 4. Auf der in den Figuren 1 und 2 sichtbaren Plattenseite 3 ist die Oberfläche des Plattenkörpers 2 in einem rechteckig berandeten Innenbereich 5 vollflächig, d. h. vollständig, mit einer Antihaftbeschichtung 6, in dem Beispiel mit einer DLC-Schicht, beschichtet. Deren Schichtdicke liegt in dem für Antihaftbeschichtungen auf Laminierplatten üblichen, einem Fachmann geläufigen Schichtdickenbereich. Die Schichtdicke ist so gering, dass die Antihaftbeschichtung 6 nur in der Vergrößerung von Fig. 3a körperlich, jedoch auch hier nicht maßstabsgerecht, dargestellt ist. Auf der gleichen, in den Figuren 1 und 2 gezeigten Plattenseite 3 ist die Oberfläche des Plattenkörpers 2 in einem Randbereich 7 nur teilflächig, also nicht vollflächig, mit Antihaftbeschichtung 6 bedeckt, was nachfolgend näher erläutert wird. In dem Beispiel ist der Randbereich 7 geometrisch aus vier jeweils streifenförmigen Randbereichsabschnitten 8 zusammengesetzt, so dass er den Innenbereich 5 als geschlossener Rahmen umgibt. Dabei grenzt der Randbereich 7 innen an den Außenrand 9 des Innenbereichs 5 entlang des gesamten Umfanges an. Der Randbereich 7 erstreckt sich entlang seines gesamten Umfanges bis an den Außenrand 4 der Laminierplatte 1. Aus Figur 3 geht hervor, dass auch auf der gegenüberliegenden Plattenseite 3 eine entsprechende Aufteilung in einen Innenbereich 5 und in einen diesen umgebenden Randbereich 7 gegeben ist, wobei auch die zweite Plattenseite in der noch beschriebenen Weise bearbeitet bzw. ausgebildet ist. Dabei werden zur besseren Übersicht auf beiden Plattenseiten für einander entsprechende bzw. vergleichbare Merkmale die gleichen Bezugszeichen verwendet. Ebenfalls vereinfachend wird für die Antihaftbeschichtung stets, d. h. sowohl betreffend den Innenbereich 5 wie auch den Randbereich 3, das Bezugszeichen 6 verwendet, obwohl es sich (wie auch bei folgenden Ausführungsbeispielen) dabei nicht notwendig um die gleiche Art von Antihaftbeschichtung handeln muss. In dem Innenbereich 5 der jeweiligen Plattenseite 3 sind in dem Beispiel jeweils neun Gravuren 10 eingraviert. Das gewählte spiegelbildliche Buchstabensymbol steht symbolisch bzw. stellvertretend für jedes beim Laminierprozess zur Strukturübertragung auf den Folienstapel gewünschte Zeichen oder Motiv. In dem Beispiel, d. h. nicht notwendig, sind neun Gravuren 10 zueinander matrixartig verteilt im Innenbereich 5 angeordnet. Es versteht sich jedoch, dass auch eine davon abweichende Anzahl und Anordnung möglich wäre. Auch die gravierten bzw. im Gravurbereich vertieften Partien der Oberfläche des Plattenkörpers 2 sind vollflächig mit Antihaftbeschichtung 6 bedeckt. In dem Innenbereich 5 ist die von der Antihaftbeschichtung 6 gebildete Laminierplattenoberfläche mit Ausnahme der Gravuren hochspiegelnd.

Bei dem ersten, in den Figuren 1 bis 4 gezeigten Ausführungsbeispiel ist vorgesehen, dass bei der gebrauchsfertigen Laminierplatte 1 in dem Randbereich 7 eine Vielzahl von lokalen Teilbereichen 11 der Oberfläche des Plattenkörpers 2 nicht mit der Antihaftbeschichtung 6 bedeckt ist, wobei die Teilbereiche 11 in dem Beispiel unregelmäßig innerhalb des Randbereiches 7 verteilt liegen. Eine typische oder durchschnittlich große Abmessung A der Teilbereiche 11 ist deutlich kleiner als die Breite B des Randbereiches 7. Figur 2a ist aber auch insofern schematisch zu verstehen, dass auch das Größenverhältnis zwischen den Abmessungen A und der Breite B des Randbereiches 7 in der Praxis auch von der gewählten Darstellung abweichen kann. Auch die Flächendeckung oder der Flächenanteil, d. h. der prozentuale Anteil der Teilbereiche 11 an der Gesamtfläche des Randbereichs 7, kann von der Darstellung abweichen, also größer oder kleiner sein. Auch die Form der Teilbereiche 11 kann abweichen. Bei der Herstellung der in den Figuren 1 bis 4 gezeigten Laminierplatte 1 wurde so vorgegangen, dass der Plattenkörper 2 auf beiden Plattenseiten 3 zunächst im Innenbereich 5 und im Randbereich 7 jeweils vollständig, d. h. vollflächig, mit Antihaftbeschichtung 6 beschichtet wurde und dass anschließend nur in dem Randbereich 7 die aufgetragene Antihaftbeschichtung 6 in der Vielzahl der Teilbereiche 11 wieder entfernt wurde. Dazu wurde in dem Randbereich 7 die Antihaftbeschichtung 6 in den Teilbereichen 11 mittels Strahlbehandlung unter Verwendung von Korund als Strahlmittel entfernt.

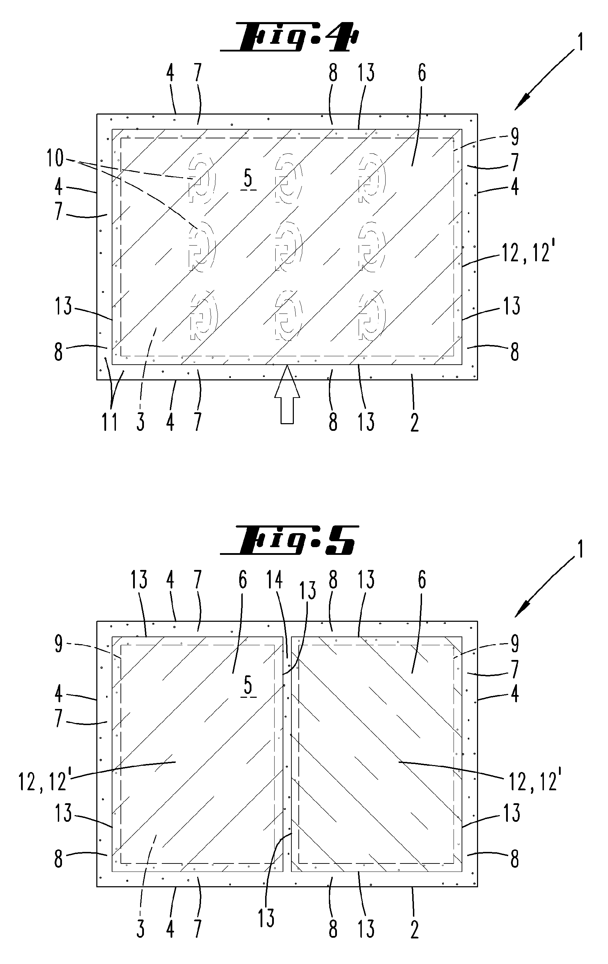

Figur 4 zeigt in einer Draufsicht eine Situation, bei der auf die in den Figuren 1 bis 3 gezeigte Laminierplatte 1 für einen Laminierprozess eine Mehrzahl von Folien 12, deren Außenränder 13 zueinander fluchten, für einen nachfolgenden Laminiervorgang aufgelegt wurde. Das Format der Folien 12 ist in der Weise auf die Abmessungen der Laminierplatte 1 abgestimmt und die Ausrichtung ist in der Weise gewählt, dass sich der Außenrand 13 der Folien 12 bzw. des Folienstapels 12' entlang seines gesamten, rechteckig verlaufenden Grundrisses innerhalb des Randbereiches 7 etwa mittig, d. h. bei etwa halber Breite, erstreckt.

Figur 5 zeigt eine Abwandlung von der in Figur 4 gezeigten Anordnung. Darin werden, wie auch in nachfolgenden Figuren, für Einzelheiten und Merkmale, die mit denen der Figuren 1 bis 4 korrespondieren, zur Vereinfachung identische Bezugszeichen verwendet. Die in Figur 5 gewählte Laminierplatte 1 besitzt auf jeder der beiden Plattenseiten 3 zwei voneinander seitlich beanstandete Innenbereiche 5, in denen die Oberfläche des Plattenkörpers 2 jeweils vollflächig mit Antihaftbeschichtung 6 beschichtet ist. Es versteht sich, dass auch andere Formate mit drei oder mehr Innenbereichen denkbar sind. Der Randbereich 7 erstreckt sich wieder streifenförmig entlang des gesamten Außenrandes 4 des Plattenkörpers 2 und umfasst zusätzlich einen beide längsseitigen Randabschnitte 8 miteinander verbindenden Mittelsteg 14, so dass der Randbereich 7 beide Innenbereiche 5 jeweils rahmenartig umschließt. Auf die Laminierplatte 1 sind in der gezeigten Anordnung zwei Folienstapel 12', deren Folien 12 ein im Vergleich zu Figur 4 kleineres Format besitzen, so aufgelegt, dass sich der Außenrand 13 beider Folienstapel 12' jeweils entlang des gesamten Umfanges in dem Randbereich 7 erstrecken. Mit dem Pfeil ist das Ansetzen eines Spatels zur Ablösung des Folienverbundes von der Laminierplatte 1 nach dem Laminiervorgang angedeutet.

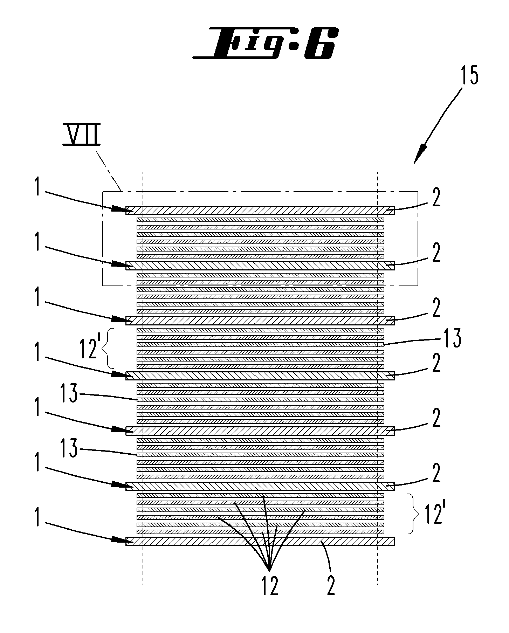

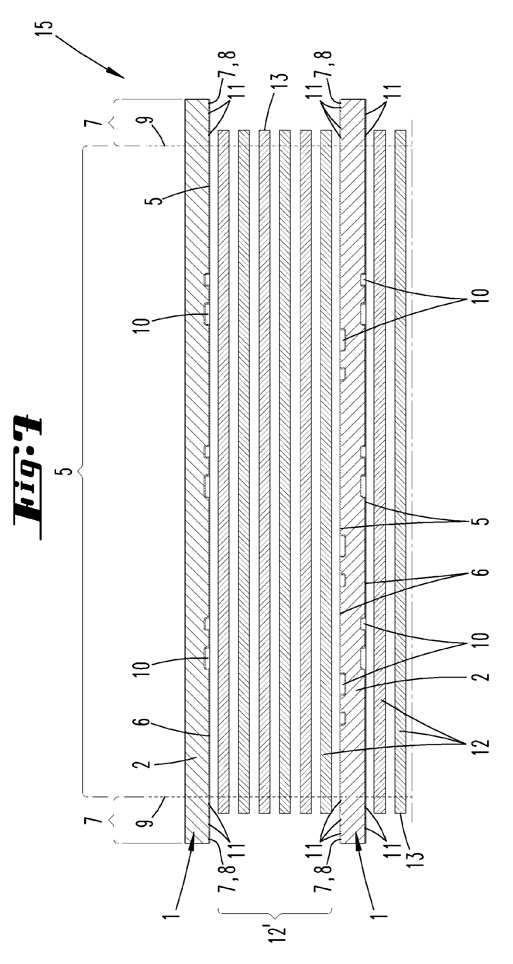

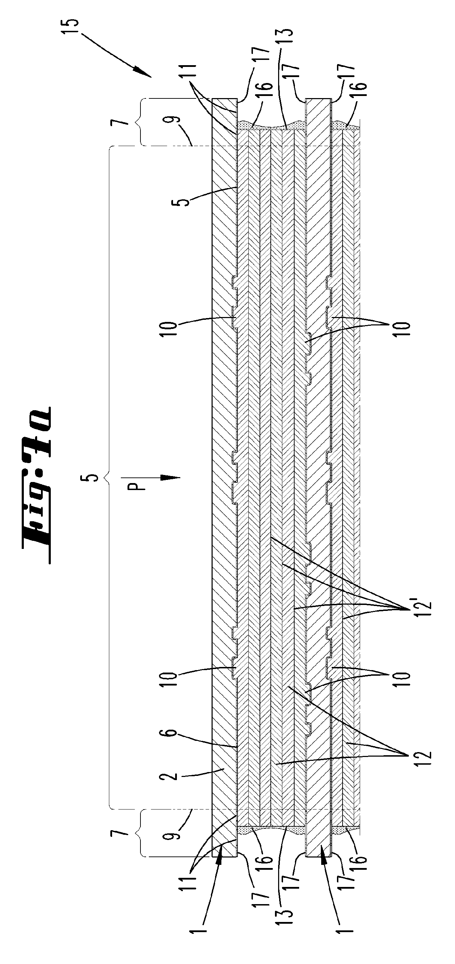

Figur 6 zeigt eine Anordnung 15 zum Laminieren, die in dem Beispiel, d. h. nicht notwendig, eine Anzahl von sieben Laminierplatten umfasst. Bis auf die oberste und die unterste Laminierplatte entsprechen die Laminierplatten 1 den in den Figuren 1 bis 4 gezeigten Laminierplatten 1. Abweichend ist bei der obersten und untersten Laminierplatte 1 die von dem Stapel weg weisende Oberfläche des Plattenkörpers 2 unbearbeitet. Zwischen je zwei in dem Stapel benachbarte Laminierplatten 1 ist jeweils ein Folienstapel 12' in der mit Bezug auf Figur 4 beschriebenen Ausrichtung eingelegt, wobei jeder Folienstapel 12 in dem Beispiel aus sechs einzelnen, vollflächig dünn mit Klebstoff beschichteten Folien 12 besteht. Es wird angemerkt, dass auch nicht mit Klebstoff beschichtete Folien eingesetzt werden können, wobei dann ohnehin eine vergleichsweise geringe Neigung zu Antihaftschicht-Ablösungen zu erwarten wäre. Die gestapelte Anordnung 15, die auch als Stack bezeichnet wird, umfasst in dem Beispiel sechs Sub-Stacks, die jeweils aus zwei benachbarten Laminierplatten 1 sowie den dazwischen gestapelten Folien 12 bestehen. Die Figuren 6 und 7 zeigen den Stapel zur Veranschaulichung zunächst in einer auseinander gezogenen Explosionsansicht. Zum Vergleich zeigt Figur 7a den auch in Figur 7 gezeigten Teil der Anordnung 15 nach dem erfolgten Laminiervorgang, bei dem die Anordnung mittels auf die äußeren Laminierplatten 1 einwirkendem Druck (vgl. den Pfeil P) und unter Einwirkung von Wärme zusammengepresst wurde. Schematisch ist dargestellt, dass zufolge der Druck- und Temperatureinwirkung Klebstoff 16 (dieser ist in den Figuren 6 und 7 aufgrund des sehr dünnen flächigen Auftrages nicht mit dargestellt) aus dem Außenrand 13 des Folienstapels 12' ausgetreten ist. Die dabei aus dem Klebstoff gebildeten Wülste 16 grenzen zufolge der beschriebenen Ausrichtung der Folienstapel 12' nur innerhalb des unkritischen Randbereiches 7 an die Laminierplattenoberfläche 17 an. Unter der Laminierplattenoberfläche wird die freiliegende Oberfläche der Laminierplatte 1 verstanden, die in dem Beispiel im Randbereich 7 innerhalb seiner Teilbereiche 11 von der Oberfläche des Plattenkörpers 2 und ansonsten von der Antihaftbeschichtung 6 gebildet wird. Zufolge der von den Teilbereichen 11 unterbrochenen Antihaftbeschichtung 6 wird auf die schon beschriebene Weise zuverlässig verhindert, dass sich etwaige Ablösungen der Antihaftbeschichtung 6 beim Abtrennen des Folienstapels 12' von den Laminierplatten 1 bis in deren Innenbereich 5 ausweiten können. Nach dem Abtrennen des laminierten Folienstapels 12' von den Laminierplatten 1 können aus dem laminierten Stapel, dessen Folien nun miteinander verbunden sind, ein oder mehrere Dokumente (abhängig von der Aufteilung) herausgestanzt werden. In dem Beispiel mit neun Gravuren könnten bspw. neun Dokumente bzw. Karten ausgestanzt werden.

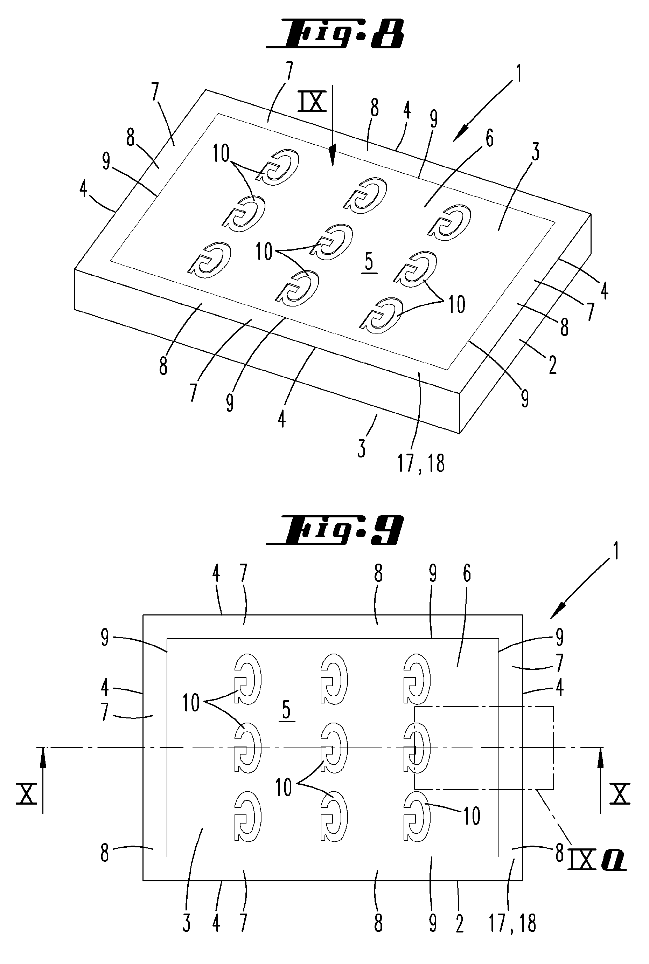

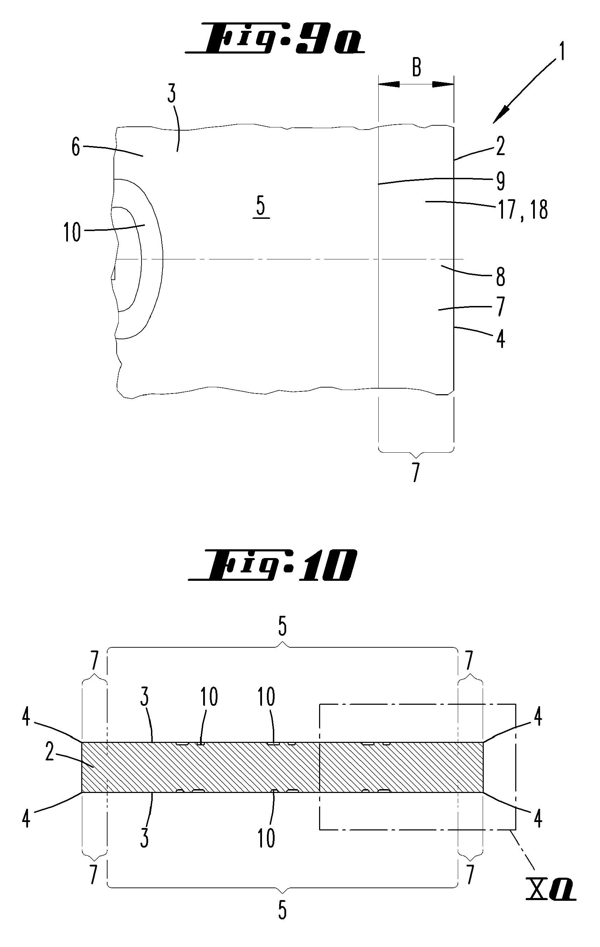

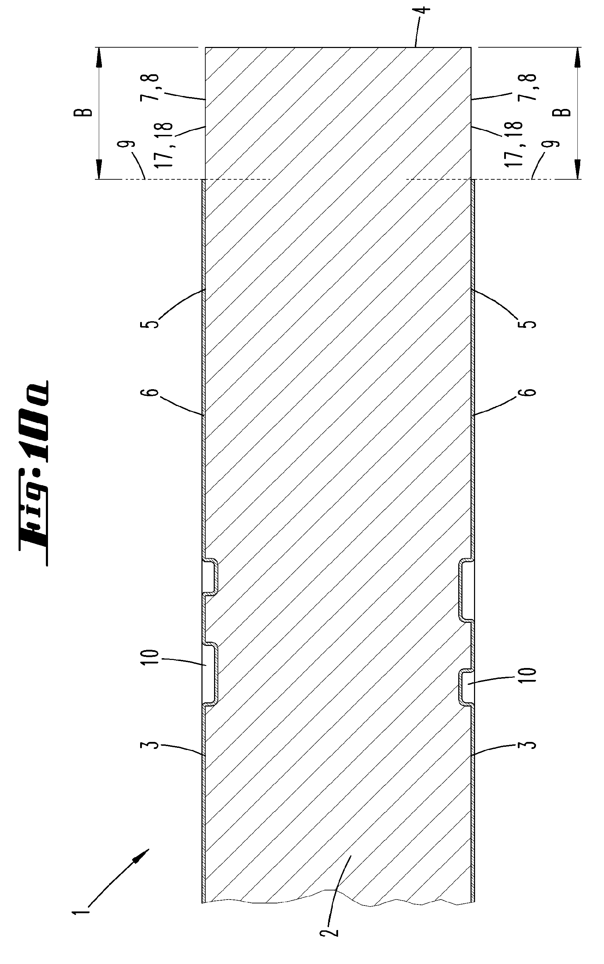

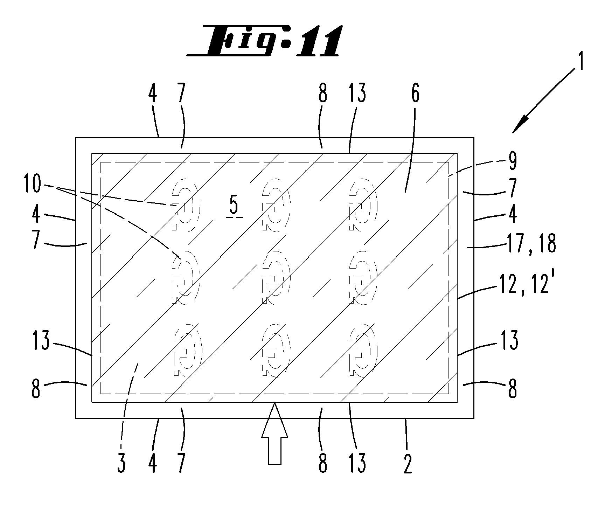

In den Figuren 8 bis 11 ist ein weiteres bevorzugtes Ausführungsbeispiel einer erfindungsgemäßen Laminierplatte 1 dargestellt. Dieses unterscheidet sich darin von der in den Figuren 1 bis 4 gezeigten ersten Ausführungsform, dass die Oberfläche des Plattenkörpers 2 in dem rahmenartigen Randbereich 7 vollflächig poliert wurde, wobei in dem Randbereich 7 auch anschließend keine Antihaftbeschichtung aufgetragen wurde. Hingegen wurde in dem Innenbereich 5 die Oberfläche des Plattenkörpers 2 vollflächig mit Antihaftbeschichtung 6 beschichtet. Mit anderen Worten wird die Laminierplattenoberfläche 17 in dem Innenbereich 5 von der Antihaftbeschichtung 6 und in dem Randbereich 7 unmittelbar von der polierten Oberfläche 18 des Plattenkörpers 2 gebildet.

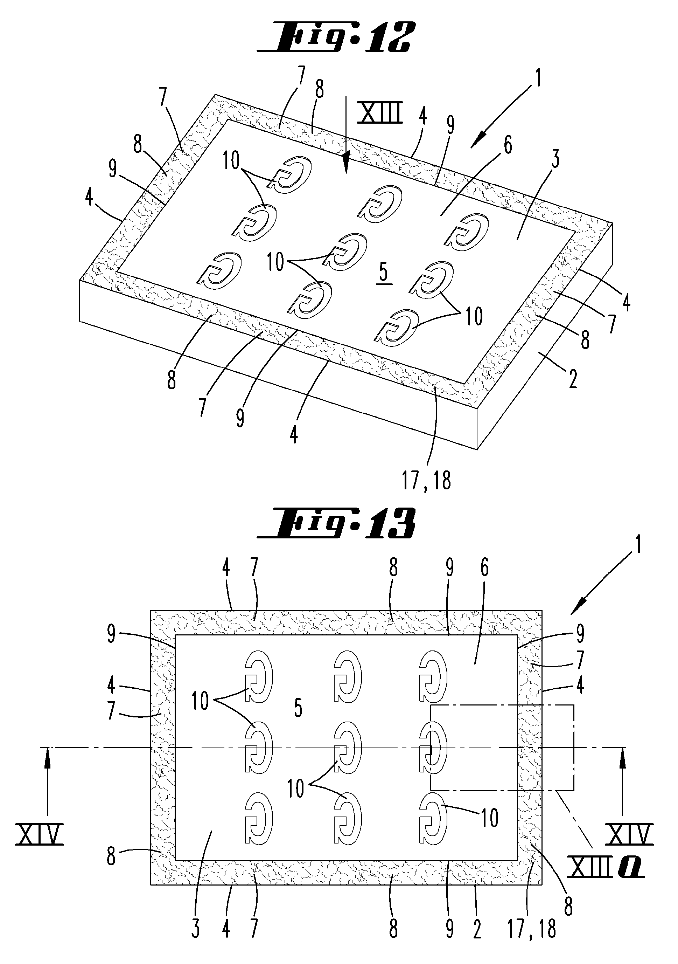

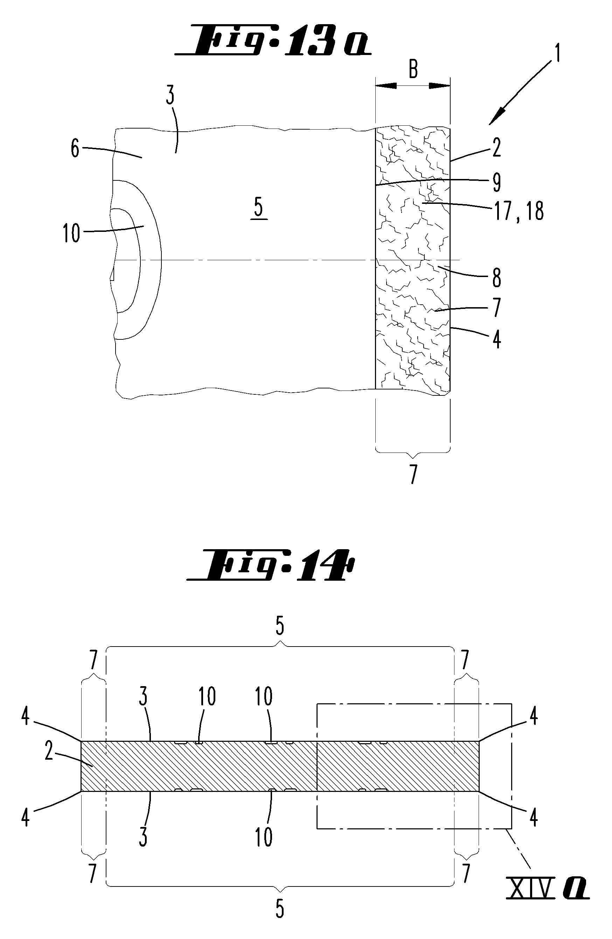

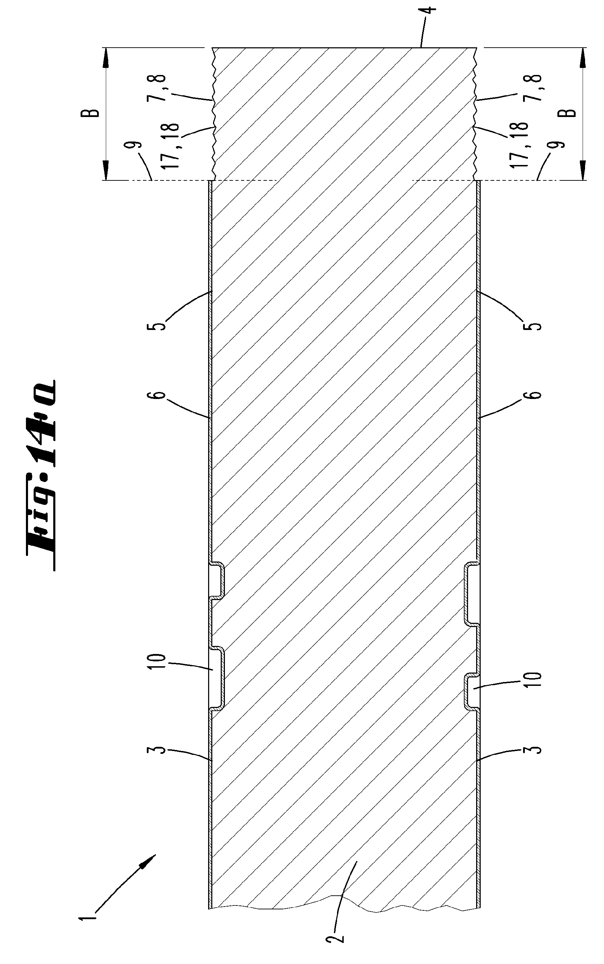

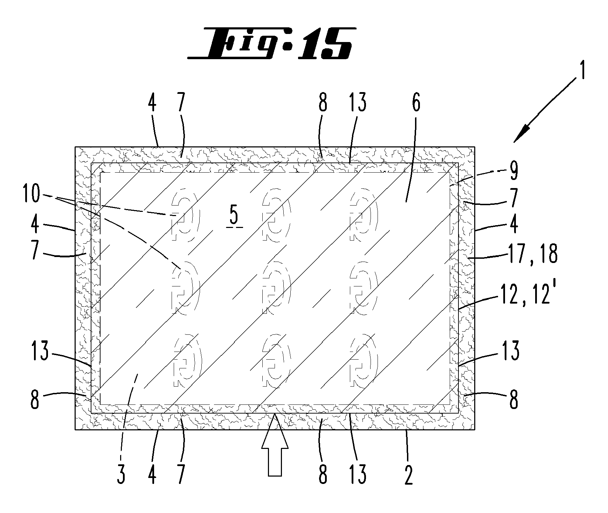

Die Figuren 12 bis 15 zeigen ein noch weiteres bevorzugtes Ausführungsbeispiel einer erfindungsgemäßen Laminierplatte 1. Figur 14a verdeutlicht als Unterschied zu den vorangehenden Ausführungsbeispielen, dass in dem Randbereich 7 die freie Oberfläche 18 des Plattenkörpers 2 vollflächig aufgeraut ist. Die Oberfläche 18 wurde nicht poliert, und es wurde dort auch keine Antihaftbeschichtung aufgetragen, so dass die aufgeraute Plattenoberfläche 18 vollflächig freiliegt und im Randbereiche 7 die Laminierplattenoberfläche 17 bildet. Die Rauigkeit bzw. Rautiefe kann von der vergrößerten, jedoch als schematisch zu betrachtenden Darstellung in Figur 14a abweichen und ist in den Figuren 12 und 13 mittels einer Schraffur angedeutet und in Figur 14 zwar auch vorhanden, jedoch aufgrund der Größenverhältnisse nicht mit dargestellt. Figur 15 zeigt wiederum die Ausrichtung eines Folienstapels 12' auf der Laminierplatte 1, der zufolge sich der Außenrand 13 des Folienstapels 12' insgesamt innerhalb des Randbereiches 7 erstreckt.

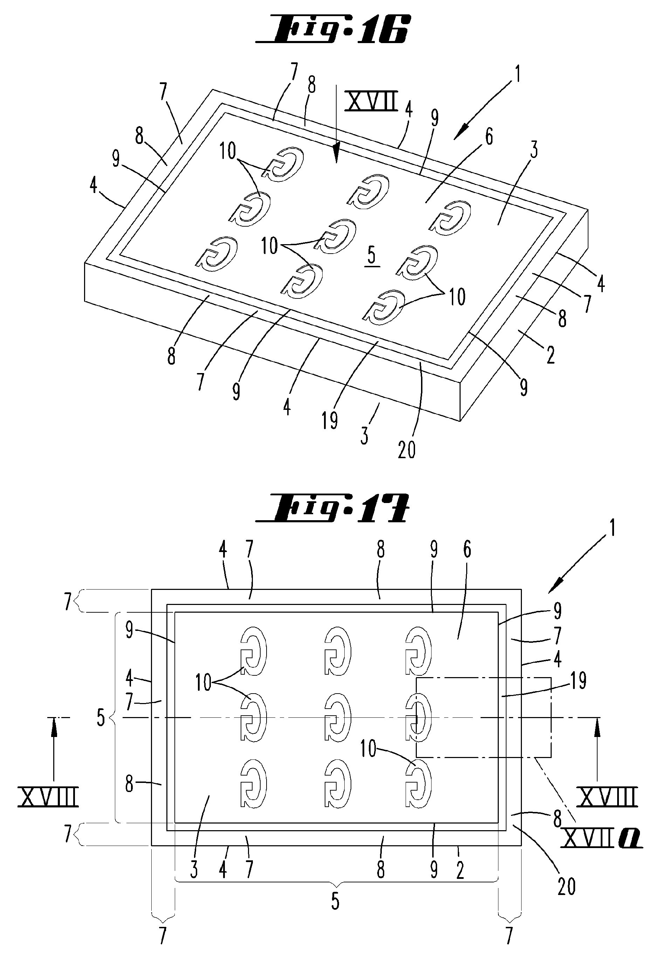

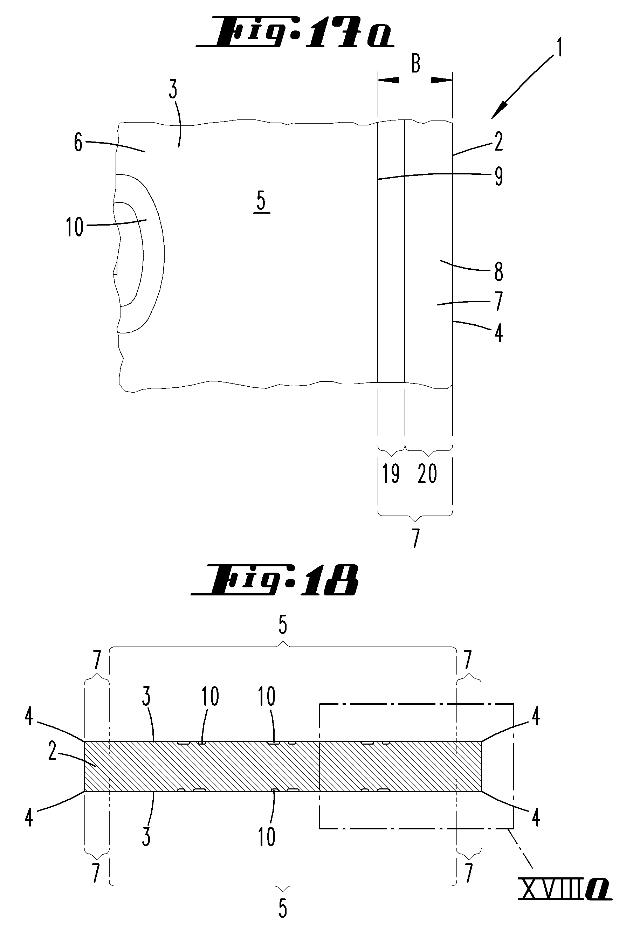

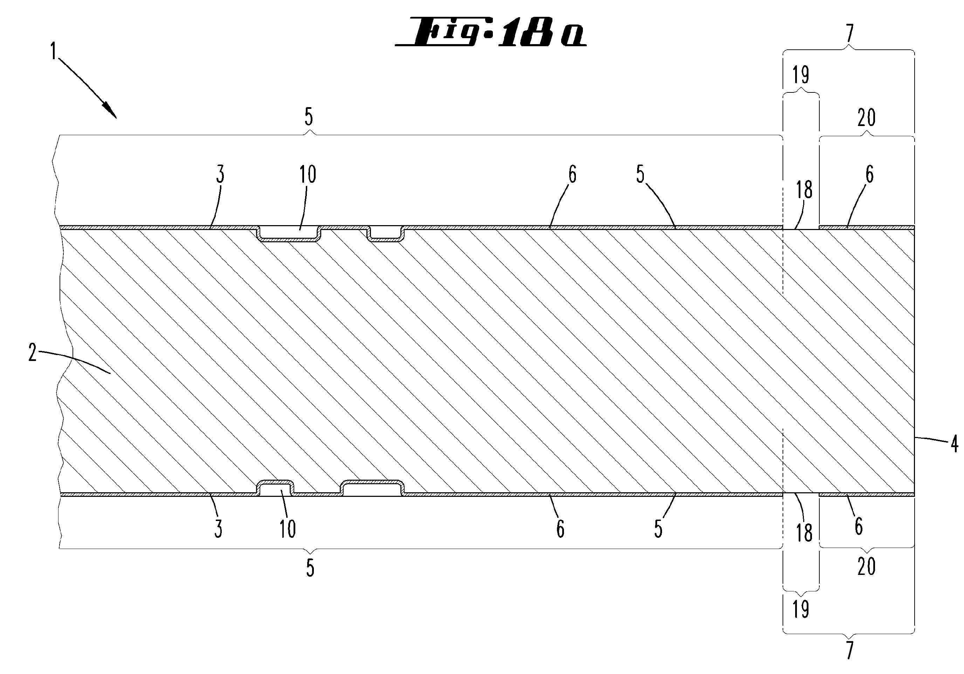

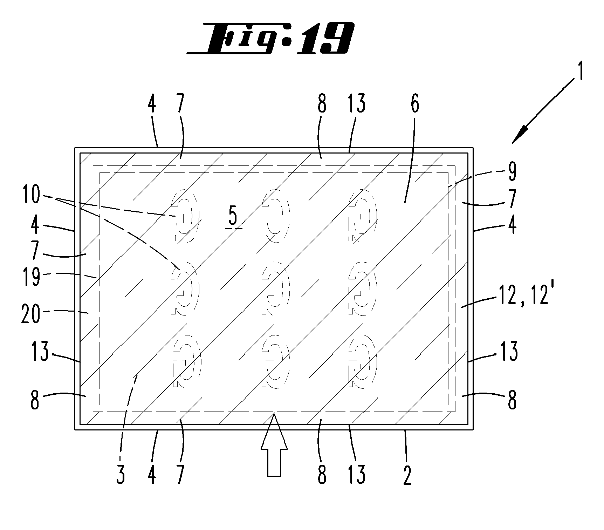

Mit den Figuren 16 bis 19 wird ein noch weiteres bevorzugtes Ausführungsbeispiel einer erfindungsgemäßen Laminierplatte 1 vorgestellt. Dabei ist auf beiden Plattenseiten 3 wiederum eine Aufteilung in einen zentralen, Gravuren 10 aufweisenden Innenbereich 5 und einen diesen rahmenartig umschließenden Randbereich 7 verwirklicht, vgl. insbesondere die Figuren 17 und 18. Allerdings wird hier innerhalb des Randbereiches 7 zwischen einem Außenbereich 20 und einem zwischen dem Innenbereich 5 und dem Außenbereich 20 liegenden Zwischenbereich 19 unterschieden. Der Randbereich 7 besteht also in diesem Beispiel aus dem Zwischenbereich 19 und dem Außenbereich 20. Der Zwischenbereich 19 grenzt an den Außenrand 9 des Innenbereichs 5 an und umschließt diesen rahmenartig, und der Außenbereich 20 grenzt an den Außenrand des Zwischenbereichs 19 an, umschließt diesen rahmenartig und reicht bis zu dem Außenrand 4 des Plattenkörpers 2. Der Innenbereich 5 ist vollflächig mit Antihaftbeschichtung 6 beschichtet. Auch der Außenbereich 20 ist vollflächig mit Antihaftbeschichtung 6 beschichtet, wobei diese Beschichtung durch den nicht mit Antihaftbeschichtung bedeckten Zwischenbereich 19 vollständig von der Antihaftbeschichtung 6 im Innenbereich 5 getrennt ist, vgl. auch Figur 18a. Bei der Herstellung wurde auf den beiden Plattenseiten 3 in dem Randbereich 7 zunächst die gesamte noch freiliegende Oberfläche 18 des Plattenkörpers 2 vollflächig poliert. Anschließend wurde diese polierte Oberfläche nur in dem Außenbereich 20 vollflächig mit Antihaftbeschichtung 6 beschichtet, während die polierte Oberfläche 18 in dem Zwischenbereich 19 frei geblieben ist, also nicht beschichtet wurde.

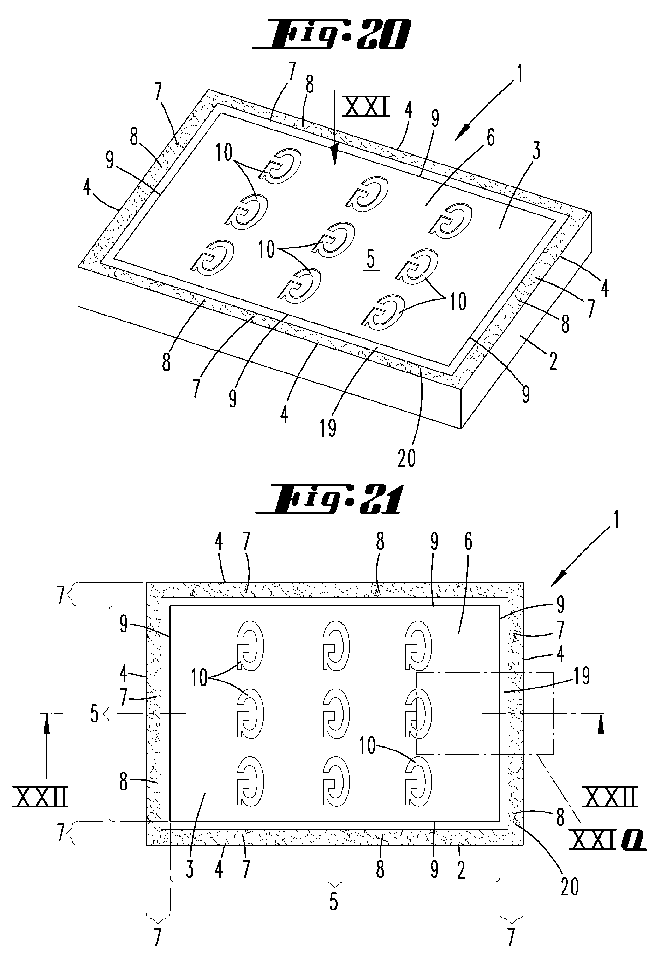

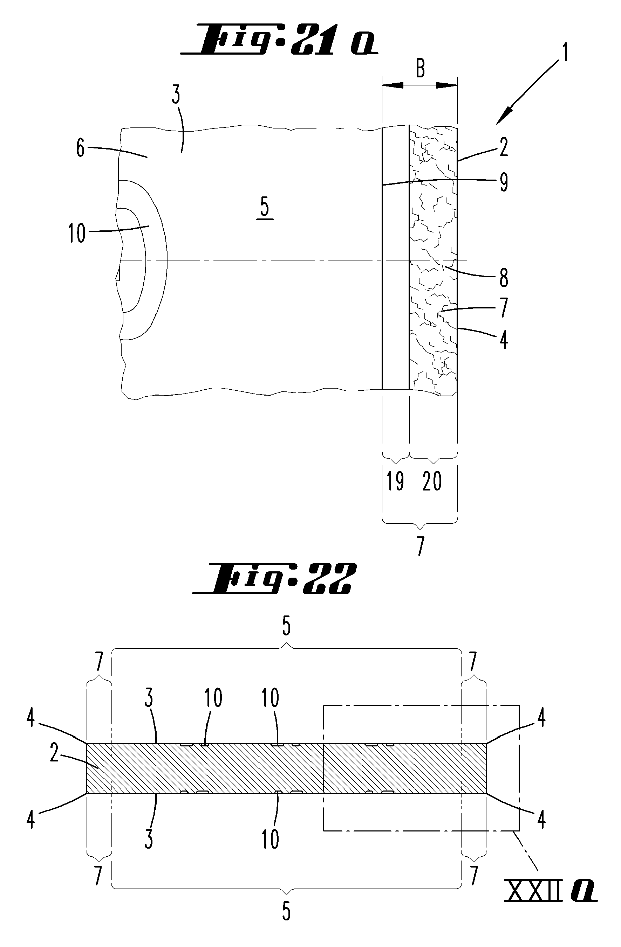

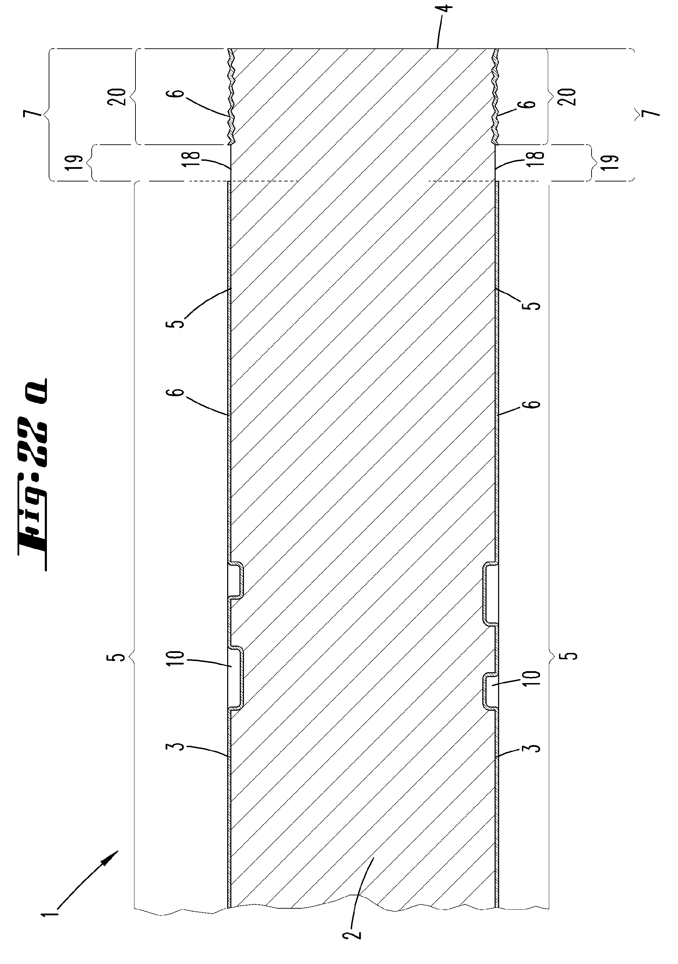

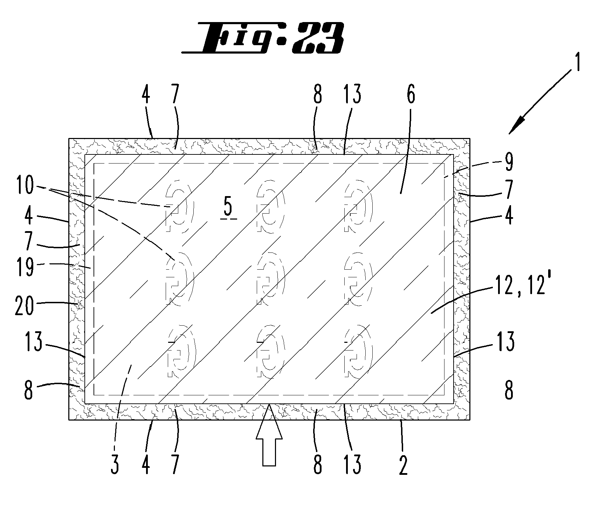

In den Figuren 20 bis 23 ist schließlich ein noch weiteres bevorzugtes Ausführungsbeispiel einer erfindungsgemäßen Laminierplatte 1 gezeigt. Auch dort ist der Randbereich 7 in der zuvor beschriebenen Weise aus einem Zwischenbereich 19 und einem Außenbereich 20 zusammengesetzt. Der Unterschied zu dem vorangehenden Ausführungsbeispiel liegt darin, dass die Oberfläche 18 des Plattenkörpers 2 nur in dem Zwischenbereich 19 poliert wurde und nicht mit Antihaftbeschichtung bedeckt ist, während die Oberfläche des Plattenkörpers 2 in dem Außenbereich 20 zunächst vollflächig aufgeraut wurde und anschließend die aufgeraute Oberfläche vollflächig mit Antihaftbeschichtung 6 beschichtet wurde. Dies bedeutet, dass auch bei diesem Ausführungsbeispiel die Antihaftbeschichtung 6 des Außenbereiches 20 durch den Zwischenbereich 19 vollständig von der Antihaftbeschichtung 6 des Innenbereichs abgetrennt ist. Dadurch, dass die Antihaftbeschichtung 6 auf eine aufgeraute Oberfläche aufgetragen ist, lässt sich im Vergleich zu einem Auftrag von Antihaftbeschichtung auf einer glatten Oberfläche eine noch niedrigere Haftungsneigung erreichen. Vorzugsweise kann bspw. der arithmetische Mittenrauwert Rₐ der Laminierplattenoberfläche in dem mit Antihaftbeschichtung 6 beschichteten Außenbereich 20 zur Erzielung eines lateralen Mikroformschlusses beim Laminierprozess zwischen der Laminierplattenoberfläche und einer angrenzenden (in den Figuren nicht gezeigten) Folie etwa gleich 1 µm betragen oder größer sein. Bevorzugt ist, dass dieser arithmetische Mittenrauwert kleiner als 10 µm ist, vorzugsweise kann er in einem Wertebereich von 2 bis 5 µm, weiter vorzugsweise in einem Wertebereich von 2,5 bis 3,5 µm liegen und noch weiter vorzugsweise 3 µm oder etwa 3 µm betragen.

## Patentansprüche

1. Laminierplatte (1), für Laminierprozesse, insbesondere zur Herstellung von Dokumenten wie bspw. Führerscheinen, Personalausweisen, Kreditkarten oder dergleichen mittels Folien, wobei die Laminierplatte (1) einen Plattenkörper (2) umfasst, dessen Oberfläche auf zumindest der einen der beiden Plattenseiten (3) in zumindest einem Innenbereich (5) vollständig mit Antihaftbeschichtung (6) beschichtet ist, **dadurch gekennzeichnet, dass** zumindest auf dieser einen Plattenseite (3) die Oberfläche des Plattenkörpers (2) in zumindest einem Randbereich (7) außerhalb des Innenbereichs (5) nicht oder nur teilflächig mit Antihaftbeschichtung (6) bedeckt ist.

2. Laminierplatte (1) nach Anspruch 1, **dadurch gekennzeichnet, dass** auch auf der anderen Plattenseite (3) die Oberfläche des Plattenkörpers (2) in zumindest einem Innenbereich (5) vollständig mit Antihaftbeschichtung (6) beschichtet ist und in zumindest einem Randbereich (7) außerhalb des Innenbereichs (5) nicht oder nur teilflächig mit Antihaftbeschichtung (6) bedeckt ist.

3. Laminierplatte (1) nach einem oder mehreren der vorangehenden Ansprüche, **dadurch gekennzeichnet, dass** in dem Innenbereich (5) in die Oberfläche des Plattenkörpers (2) eine oder mehrere Gravuren (10), insbesondere mittels Lasergravur oder Stichelgravur, eingraviert sind.

4. Laminierplatte (1) nach einem oder mehreren der vorangehenden Ansprüche, **dadurch gekennzeichnet, dass** der Randbereich (7) an den Außenrand (9) des Innenbereichs (5) angrenzt, zumindest abschnittsweise streifenförmig berandet ist und insbesondere rahmenartig den Innenbereich (5) umschließt.

5. Laminierplatte (1) nach einem oder mehreren der vorangehenden Ansprüche, **dadurch gekennzeichnet**, das sich der Randbereich (7) zumindest abschnittsweise, insbesondere entlang seiner gesamten Umfangserstreckung, bis an den Außenrand (4) der Laminierplatte (1) erstreckt.

6. Laminierplatte (1) nach einem oder mehreren der vorangehenden Ansprüche, **dadurch gekennzeichnet, dass** in dem Randbereich (7) eine Vielzahl von Teilbereichen (11) der Oberfläche des Plattenkörpers (2) nicht mit Antihaftbeschichtung (6) bedeckt ist, wobei die Teilbereiche (11) regelmäßig oder unregelmäßig in dem Randbereich (7) verteilt sind und wobei insbesondere vorgesehen ist, dass die Abmessungen (A) der Teilbereiche (11) um eine Größenordnung oder um mehrere Größenordnungen kleiner als typische Abmessungen, insbesondere als die Breite (B) oder Länge, des Randbereiches (7) sind.

7. Laminierplatte (1) nach einem oder mehreren der vorangehenden Ansprüche, **dadurch gekennzeichnet, dass** in dem Randbereich (7) die Oberfläche des Plattenkörpers (2) vollflächig oder teilflächig poliert ist und dass die polierte Oberfläche (18) vollflächig oder zumindest teilflächig freiliegt.

8. Laminierplatte (1) nach einem oder mehreren der vorangehenden Ansprüche 1 bis 5, 7, **dadurch gekennzeichnet, dass** in dem Randbereich (7) die Oberfläche (18) des Plattenkörpers (2) vollflächig oder teilflächig aufgeraut ist und dass die aufgeraute Plattenoberfläche vollflächig oder teilflächig freiliegt.

9. Laminierplatte (1) nach einem oder mehreren der vorangehenden Ansprüche, **dadurch gekennzeichnet, dass** der Randbereich einen teilflächig oder vollflächig mit Antihaftbeschichtung (6) beschichteten Außenbereich (20) und einen zwischen dem Innenbereich (5) und dem Außenbereich (20) liegenden, nicht von Antihaftbeschichtung (6) bedeckten Zwischenbereich (19) umfasst, wobei insbesondere vorgesehen ist, dass der Zwischenbereich (19) den Innenbereich (5) rahmenartig umschließt und der Außenbereich (20) den Zwischenbereich (19) rahmenartig umschließt.

10. Laminierplatte (1) nach einem oder mehreren der vorangehenden Ansprüche, **dadurch gekennzeichnet, dass** die Oberfläche des Plattenkörpers (2) im Randbereich (7) vollflächig poliert ist, dass die polierte Oberfläche (18) in einem Zwischenbereich (19), der zwischen dem Innenbereich (5) und einem Außenbereich (20) liegt, freiliegt und dass auf die polierte Oberfläche (18) in dem Außenbereich (20), insbesondere vollflächig, Antihaftbeschichtung (6) aufgetragen ist.

11. Laminierplatte (1) nach einem oder mehreren der vorangehenden Ansprüche, **dadurch gekennzeichnet, dass** die Oberfläche (18) des Plattenkörpers (2) im Zwischenbereich (19) poliert ist und freiliegt, dass die Oberfläche des Plattenkörpers (2) im Außenbereich (20) aufgeraut ist und dass im Außenbereich (20) auf die aufgeraute Oberfläche vollflächig oder teilflächig Antihaftbeschichtung (6) aufgetragen ist.

12. Laminierplatte (1) nach einem oder mehreren der vorangehenden Ansprüche, **dadurch gekennzeichnet, dass** die Antihaftbeschichtung (6) Kohlenstoff mit Elementzusätzen wie beispielsweise Silizium und Sauerstoff aufweist, wobei es sich insbesondere um eine Antihaftbeschichtung (6) auf Kohlenstoffbasis, wie bspw. um eine DLC-Schicht, handelt, und/oder dass die Antihaftbeschichtung (6) Teflon und/oder Nano-Partikel aufweist oder dass die Antihaftbeschichtung (6) eine CrN-Schicht ist.

13. Anordnung (15) zum Laminieren, umfassend zwei oder mehr miteinander gestapelte Laminierplatten (1), wobei zwischen je zwei Laminierplatten (1) jeweils ein Folienstapel (12') angeordnet ist, der eine Mehrzahl von, insbesondere mit Klebstoff beschichteten, Folien (12) umfasst, **dadurch gekennzeichnet, dass** es sich bei den Laminierplatten (1) um Laminierplatten (1) gemäß einem oder mehreren der vorangehenden Ansprüche handelt und dass in einer zu der Laminierplattenoberfläche (17) senkrechten projektionsmäßigen Betrachtung der Außenrand (13) des Folienstapels (12') in dem Randbereich (7), insbesondere in dem Außenbereich des Randbereichs (7), der Laminierplatten (1) verläuft.

14. Verfahren zur Herstellung von Laminierplatten (1), wobei zur Herstellung einer Laminierplatte (1) ein Plattenkörper (2) bereitgestellt und auf zumindest einer der beiden Plattenseiten (3) des Plattenkörpers (2) an seiner Oberfläche in zumindest einem Innenbereich (5) vollständig mit Antihaftbeschichtung (6) beschichtet wird, **dadurch gekennzeichnet, dass** zumindest auf der Plattenseite (3), auf der die Oberfläche des Plattenkörpers (2) in dem Innenbereich (5) mit Antihaftbeschichtung (6) beschichtet ist, die Oberfläche des Plattenkörpers (2) in zumindest einem außerhalb des Innenbereichs (5) liegenden Randbereich (7), der den Innenbereich (5) insbesondere rahmenartig umschließt, vollflächig mit Antihaftbeschichtung (6) beschichtet wird, wonach die Antihaftbeschichtung (6) in Teilbereichen (11) des Randbereiches (7) entfernt wird, oder dass die Oberfläche des Plattenkörpers (2) in dem besagten Randbereich (7) nicht oder nur teilflächig mit Antihaftbeschichtung (6) beschichtet wird.

15. Verfahren nach Anspruch 14, **dadurch gekennzeichnet, dass** auch auf der anderen der beiden Plattenseiten (3) die Oberfläche des Plattenkörpers (2) in zumindest einem Innenbereich (5) vollständig mit Antihaftbeschichtung (6) beschichtet wird und dass die Oberfläche des Plattenkörpers (2) in zumindest einem außerhalb des Innenbereichs (5) liegenden Randbereich (7), der den Innenbereich (5) insbesondere rahmenartig umschließt, vollflächig mit Antihaftbeschichtung (6) beschichtet wird, wonach die Antihaftbeschichtung (6) in Teilbereichen (11) des Randbereiches (7) entfernt wird, oder dass die Oberfläche in dem genannten Randbereich (7) nicht oder nur teilflächig mit Antihaftbeschichtung (6) beschichtet wird.

16. Verfahren nach einem oder mehreren der Ansprüche 14-15, **dadurch gekennzeichnet, dass** in dem Randbereich (7) die Antihaftbeschichtung (6) in Teilbereichen (11) mittels Strahlbehandlung entfernt wird, insbesondere unter Verwendung von Korund oder Glasperlen als Strahlmittel, wobei insbesondere Strahlmittel mit einer Korngröße im Bereich von 355 bis 500 Mikrometern verwendet wird, und/oder dass in dem Randbereich (7) die Antihaftbeschichtung (6) in Teilbereichen (11) mittels Gravur eines regelmäßigen oder unregelmäßigen Musters, insbesondere mittels Stichel, Laser, oder mittels lokalem Ätzen in Verbindung mit fotolithografischen Schritten oder dergleichen, entfernt wird.

17. Verfahren nach Anspruch 14, betreffend die darin enthaltene Alternative, dass die Oberfläche des Plattenkörpers (2) in dem besagten Randbereich (7) nicht oder nur teilflächig mit Antihaftbeschichtung (6) beschichtet wird, insbesondere Verfahren nach Anspruch 15, betreffend die darin enthaltene Alternative, dass die Oberfläche in dem genannten Randbereich (7) nicht oder nur teilflächig mit Antihaftbeschichtung (6) beschichtet wird, **dadurch gekennzeichnet, dass** die freiliegende Oberfläche (18) des Plattenkörpers (2) in dem Randbereich (7) vollflächig oder teilflächig aufgeraut wird.

18. Verfahren nach einem oder mehreren der Ansprüche 14-17, **dadurch gekennzeichnet, dass** die freiliegende Oberfläche des Plattenkörpers (2) innerhalb des Randbereichs (7) nur in einem mittels eines Zwischenbereichs (19) von dem Innenbereich (5) getrennten Außenbereich (20) aufgeraut und anschließend vollflächig oder teilflächig mit Antihaftbeschichtung (6) beschichtet wird.

19. Verfahren nach Anspruch 17, **dadurch gekennzeichnet, dass** in dem Randbereich (7), insbesondere nur in dem Außenbereich (20), die Aufrauung mittels Strahlbehandlung, insbesondere unter Verwendung von Korund oder Glasperlen als Strahlmittel, erfolgt, wobei insbesondere Strahlmittel mit einer Korngrösse im Bereich von 355 bis 500 Mikrometern verwendet wird, und/oder dass in dem Randbereich (7), insbesondere in dem Außenbereich (20), die Aufrauung mittels Gravur eines regelmäßigen oder unregelmäßigen Musters, insbesondere mittels Stichel, Laser, oder mittels lokalem Ätzen in Verbindung mit fotolithografischen Schritten oder dergleichen, erfolgt.

20. Verfahren nach einem oder mehreren der Ansprüche 14-19, **dadurch gekennzeichnet, dass** in dem Randbereich (7) die Oberfläche des Plattenkörpers (2) vollflächig oder teilflächig poliert wird.

21. Verfahren nach einem oder mehreren der Ansprüche 14-20, **dadurch gekennzeichnet, dass** im Randbereich (7) die Oberfläche des Plattenkörpers (2) vollflächig poliert wird und dass die dabei gebildete polierte Oberfläche (18) nur in einem durch einen Zwischenbereich (19) des Randbereichs (7) von dem Innenbereich (5) getrennten Außenbereich (20) des Randbereichs (7) mit Antihaftbeschichtung (6) beschichtet wird.

22. Verfahren nach einem oder mehreren der Ansprüche 14-21, **dadurch gekennzeichnet, dass** die Oberfläche des Plattenkörpers (2) innerhalb des Randbereiches (7) nur in dem Zwischenbereich (19) poliert wird, ohne dass Antihaftbeschichtung (6) auf die polierte Oberfläche (18) aufgetragen wird.

23. Verfahren nach einem oder mehreren der Ansprüche 14-22, **dadurch gekennzeichnet, dass** eine Kohlenstoff mit Elementzusätzen wie beispielsweise Silizium und Sauerstoff enthaltende Antihaftbeschichtung (6), insbesondere eine Antihaftbeschichtung (6) auf Kohlenstoffbasis wie bspw. eine DLC-Schicht, und/oder eine Antihaftbeschichtung (6), die Teflon und/oder Nano-Partikel aufweist, und/ oder eine CrN-Schicht als Antihaftbeschichtung (6) auf den Plattenkörper (2) aufgetragen wird, wobei die Antihaftbeschichtung (6) insbesondere im Sol-Gel-Verfahren hergestellt wird.

24. Laminierplatte (1) nach einem oder mehreren der Ansprüche 1 bis 13, **dadurch gekennzeichnet, dass** an der Oberfläche der Laminierplatte (1) die Rauigkeit, insbesondere die gemittelte Rautiefe und/oder der arithmetische Mittenrauwert, in zumindest einem von Antihaftbeschichtung (6) bedeckten Bereich des Randbereiches (7) oder in den von Antihaftbeschichtung (6) bedeckten Bereichen des Randbereichs (7) größer ist als in dem von Antihaftbeschichtung (6) bedeckten Innenbereich (5).

25. Laminierplatte (1) nach Anspruch 24, **dadurch gekennzeichnet, dass** an der Oberfläche der Laminierplatte (1) die gemittelte Rautiefe und/oder der arithmetische Mittenrauwert in zumindest einem von Antihaftbeschichtung (6) bedeckten Bereich des Randbereiches (7) oder in den von Antihaftbeschichtung (6) bedeckten Bereichen des Randbereichs (7) etwa 1 Mikrometer beträgt oder größer als 1 Mikrometer ist und/oder kleiner als 10 Mikrometer ist, insbesondere im Wertebereich von 2-5 Mikrometern liegt, insbesondere im Wertebereich von 2,5 - 3,5 Mikrometern liegt und insbesondere 3 Mikrometer oder etwa 3 Mikrometer beträgt.
